# EUROPEAN PATENT SPECIFICATION

(11) **EP 4 049 530 B1**
(45) Date of publication and mention of the grant of the patent: **18.09.2024**
(21) Application number: 21159228.2
(22) Date of filing: 25.02.2021
(51) Int. Cl.: A01G 9/14, A01G 13/02, A01G 13/04

(54) **PLASTIC FILM WITH THERMOCHROMIC PROPERTIES**
KUNSTSTOFFFOLIE MIT THERMOCHROMEN EIGENSCHAFTEN
FILM PLASTIQUE PRÉSENTANT DES PROPRIÉTÉS THERMOCHROMIQUES

(43) Date of publication of application: 31.08.2022
(73) Proprietor: Daios, Asterios, 59200 Naoussa (GR)
(72) Inventor: Dimitrios, Daios, 54622 Thessaloniki (GR)
(74) Representative: Von Rohr Patentanwälte Partnerschaft mbB

(56) References cited:
- EP-B1- 3 291 666
- CN-A- 101 418 094
- CN-A- 108 084 471
- CN-A- 108 124 659
- DE-U1- 202013 011 932
- JP-A- 2012 140 753

## Description

The present invention relates to the technical field of plastic films, in particular to agricultural plastic films.

In particular, the present invention relates to a plastic film with thermochromic properties, in particular for agricultural use, comprising at least one layer A and optionally further layers, wherein the layer A comprises a thermoplastic polymer in which thermochromic nanoparticles are embedded.

In a further aspect, the present invention relates to the use of an inventive, in particular multilayer, plastic film for, in particular perennial, agricultural applications, preferably in and/or on greenhouses or low tunnels, more preferably to improve crop growth.

The impacts of progressive urbanization, constantly growing world population and changing climate conditions - to name only a few - constitute increasing challenges for the agricultural industry. On the one hand, consistent and high agronomic yields as well as reliable and appropriate food qualities are demanded, while on the other hand a more sustainable, eco- and climate-friendly agriculture is needed and much sought after.

An essential aspect in this context is the assurance and ideally improvement of growth and yield of crop plants.

Generally, plants evolve from seed to sprout and then go through vegetative, budding, flowering and ripening stages. As plants grow, their nutritional needs change. However, during all development stages, plants need air, light, warmth, water and distinctive nutrients. An optimal growth of a plant accordingly depends on an appropriate balance of these different contributing factors.

Specifically, light, in particular sunlight or solar radiation, directly influences plant growth and flowering by inducing a plants' morphogenesis as well as photosynthesis, wherein light energy is converted into chemical energy stored in the form of carbohydrates. Accordingly, plants are dependent on light to generate nutritional components, induce the growing cycle and allow for proper development. Without light, most plants would not be able to grow or reproduce.

Overall, the interactions of plants with light are complex. However, specific regions or areas of in particular sunlight or solar radiation, which comprises radiation that covers almost the entire range of the electromagnetic spectrum, are more relevant for photosynthesis and morphogenesis than others. Visible light is in particular relevant for crop growth and defined as having wavelengths in the range of approx. 380 to 760 nm. Here, the key areas involved in photosynthesis are the blue range, which corresponds to wavelengths of between 400 to 500 nm, and the red range, which corresponds to wavelengths of between 600 to 700 nm.

At the same time, sunlight, or more particularly certain portions of the solar radiation, can cause damage to crop plants, in particular during months with intense insolation, e.g. during summer season, and even more pronounced in greenhouses or low tunnels, in which the crop is cultivated. Here, the invisible part of sunlight or solar radiation, i.e. UV-light or radiation as well as infrared light or radiation, can have harmful effects on the crops, e.g. from either causing cell damage or high levels of thermal stress.

For example, direct and too intense solar radiation can cause high heat loads by means of intense infrared (IR) light or radiation, respectively. Such intensive heat radiation can cause skin burns of the plants and induce the stomata of the leaves to close, which decelerates or even stops photosynthesis and thus the overall growth of the plant. Also, dehydration occurs, which leads to plant stress and can overall result in a drastic reduction of the crop yield.

To prevent crop damage and even more ensure reliable crop growth and yield, there is particular need on the one hand to shade the crop plants, in particular during the seasons and months when sunlight becomes very intense, and on the other hand, to provide ideal light conditions for the plants to achieve proper growth and reliably high crop yields.

In the past, several respective efforts to address these issues have been made.

For example, Chinese patent application CN 103660485 A proposes the use of several films at a distance of approximately 15 cm, wherein one of the films is electro-chromic using a photochromic compound, to provide adjustable shading. This solution, however, is expensive regarding the installation while at the same time lacking durability as the photochromic compound is not protected from oxidation.

European patent EP 3 291 666 B1 refers to a plastic film for perennial agricultural use either in greenhouses or under low tunnels that self-adjusts the shading provided in the covered space. The shading is achieved by incorporating a photochromic compound or a combination of photochromic compounds in a layer of multiple layers in a multilayer film.

The aforementioned documents address the issue of providing sufficient shade by means of adjustable films to crop plants in the event of too intense sunlight. However, despite reducing the heat load from intense solar radiation on the crops, shading reduces also the visible light available to the crops covered by the plastic film, so that growth mechanisms may be retarded or limited.

Chinese patent application CN 101418094 A refers to a normal-temperature reversible temperature-chromatic multifunctional agricultural film and to a production method thereof. The thermochromic effect is achieved by incorporation of variously colored MC pigment powders, which for example change from black to white in a temperature-dependent manner. According to one example, the plastic film is black at temperature below 29 °C and turns white, if temperatures increase above 29 °C. In the black state, however, the crops are shielded off from visible light which potentially reduces their growth. At higher temperatures, when the plastic film turns white, the crops are exposed to a greater proportion of light. However, thermal radiation cannot be shielded off by the white plastic film very effectively leading potentially to thermal stress over time.

In view of this prior art, an application that provides sufficient sunlight, i.e. light or radiation in the visible region of the electromagnetic spectrum, to crops and at the same time protects the crop plants effectively against high heat loads, would be desirable. Document JP 2021-140753 A relates to a transmissive film material with heat shielding and heat-generating properties, which absorbs near-infrared rays to generate heat when a temperature is low and reflects near-infrared rays to shield heat when a temperature is high. The transmissive film material is a flexible sheet including a heat control layer. The heat-control layer has a sea-island dispersion structure comprising an incompatible mixture formed of a synthetic resin including a thermochromic material and a synthetic resin including at least one near-infrared absorbing substance selected from the group consisting of a particulate of a near-infrared absorbing inorganic compound and a near-infrared absorbing organic dye, and is a resin layer that changes heat-shielding and heat-generating properties by heat.

It is therefore an objective of the present invention to avoid or at least mitigate the disadvantages and problems associated with the state of the art described above.

In particular, one objective of the present invention is to provide a plastic film that allows for protection of crop plants against thermal stress and at the same time provides sufficient supply with the growth-relevant visible light.

Subject-matter of the present invention is a plastic film with thermochromic properties, in particular for agricultural use.

Further subject-matter of the present invention is the use of an, in particular multilayer, plastic film for, in particular perennial, agricultural applications, preferably in and/or on greenhouses or low tunnels.

It is understood that particular features, in particular special embodiments or the like, which are mentioned in the following and are only described in relation to one aspect of the present invention, apply also in relation to the other aspects of the present invention, without this requiring any express mention.

Furthermore, for all relative or percentage, in particular weight-related, quantities or amounts stated below, it is to be noted that, within the context of this invention, these are to be selected by the person skilled in the art in such a way that the sum of the ingredients, additives or auxiliary substances or the like always results in 100 percent or 100 percent by weight. This, however, goes without saying for the person skilled in the art.

In addition, all of the parameters specified below can be determined by standardized or explicitly specified determination methods or by common determination methods known per se by the person skilled in the art.

With this provision made, the subject-matter of the present invention is explained in more detail in the following.

The subject-matter of the present invention is a plastic film with thermochromic properties, in particular for agricultural use, comprising at least one layer A, wherein the layer A comprises a thermoplastic polymer in which thermochromic nanoparticles are embedded, and further layers, characterized in that the thermochromic nanoparticles are stabilized against oxidation by means of an oxidation barrier, wherein the oxidation barrier is provided in the form of a layer arranged around the thermochromic nanoparticles and/or arranged on either side of the layer A.

According to a preferred embodiment of the present invention, the inventive plastic film is a multilayer plastic film.

As was surprisingly found in the context of the present invention, the plastic film according to the present invention reliably and efficiently provides adaptable sun protection and temperature control in the areas covered by the film on the basis of the thermochromic properties the film comprises, in particular by means on the thermochromic nanoparticles integrated into the plastic film structure.

In the context of the present invention, the terms "thermochromic" or "thermochromic properties" particularly relate to a temperature-dependent behavior of a chemical substance or material that relies upon changes on the molecular level which further induce a change in the macroscopic appearance of that respective substance or material. Thermochromic properties can for example originate from a temperature-dependent change in the molecular or crystal structure of a substance or from a temperature-dependent ordering in different phases which accounts in particular for liquid crystals.

The temperature-dependent and reversible processes on the molecular level usually have a direct influence on the properties and/or appearance of the respective thermochromic substance or material, which commonly can be observed as a visible change in color, e.g. from colored to colorless and vice versa.

In the context of the present invention, however, the macroscopic effects, which are induced by the temperature-dependent processes on the molecular level, preferably do not involve a visible color change, but a change in the interaction with infrared radiation or light, or thermal radiation, respectively. Accordingly, the inventive plastic film preferably displays such thermochromic behavior, that the plastic film undergoes changes which preferably are not visible to the human eye and instead proceed in the infrared region of the electromagnetic spectrum. Hence, on the macroscopic level, it is particularly envisioned that the inventive plastic film has an overall transparent or colorless appearance despite the fact that the film has thermochromic properties. Specifically, it is envisioned that the thermochromic processes take place in the infrared region of the electromagnetic spectrum, thus proceeding outside the light region that is visible to the human eye. The thermochromic properties the inventive plastic film displays or comprises, thereby preferably rely on the thermochromic nanoparticles, which are embedded in the layer A of the plastic film.

A layer in the context of the present invention is understood to be a film- or sheet-like material section which principally comprises a two-dimensional spatial expansion, e.g. in the x- and y-direction in space. The expansion in the z-direction in space in turn is insignificantly small, when compared to the expansion of the layer in the x- and y-direction in space.

Plastic films in agriculture are generally applied for protection of crops from harsh weather, e.g. heavy rain, wind or low temperatures, but also too intense insolation or hot temperatures. By means of plastic films, the growth conditions for crops can be controlled in so far that extreme insolation, rapid temperature increases or drops, or unexpected water ingress are prevented. These effects are commonly static and based on the material or color of a film. A dynamic adaption to specific weather conditions, e.g. insolation and temperature variation, however, is usually not possible or provided so that the chance to ideally design or create the growth conditions for crops covered by agricultural films is missed.

According to a particular advantage of the present invention, the inventive plastic film comprises adaptable thermal radiation or infrared light blocking properties, which the plastic film can display in dependence on the temperature the film is exposed to. Accordingly, the plastic film of the present invention can be configured such that thermal radiation or infrared light, respectively, either can shine through the plastic film or can be reflected by the plastic film.

A particular advantage of the present invention in this regard constitutes the fact, that the inventive plastic film can in particular be configured to adjust this behavior gradually, depending on the intensity and/or amount of incoming infrared light or thermal radiation which simultaneously corresponds to more or less pronounced temperature change. This means, that the inventive plastic film in particular does not only switch between infrared light-transmissive and -reflective, i.e. an on- and off-mode, but adjusts in a rather continuous manner in conjunction with light and/or radiation intensity and thus temperature development.

Visible light, which e.g. crops need for proper growth, however, can independently pass through the plastic film at all temperatures and can reach the space covered by the plastic film unhindered. Accordingly, the inventive plastic film advantageously combines in particular continuous visible light-transparency and selective, i.e. temperature-dependent, infrared light transparency and opacity or reflectivity, respectively.

In the context of the present invention, infrared light or radiation is understood to be radiation of the electromagnetic spectrum in the range from 780 nm to 1 mm, wherein the range from 780 nm to 3000 nm, i.e. the near infrared region, is particularly preferred. Thermal radiation, in the context of the present invention, is understood to be electromagnetic radiation that comprises wavelengths falling mainly into the infrared region of the electromagnetic spectrum. Thermal radiation, for example, may originate from solar radiation, but also from hot surfaces, e.g. an underground that is heated from intense insolation.

Common thermochromic plastic or polymer-based materials of the state of the art usually comprise thermochromic dyes, e.g. leuco dyes, or liquid crystals, which switch colors in a temperature-dependent manner. This color switch necessarily takes place in the visible region of the electromagnetic spectrum. For example, leuco dyes switch from colored to white in a reversible manner, for example via the absorption of photons of visible light. For agricultural applications, however, this mode of action is not well suited as the available amount of visible light is potentially diminished while thermal radiation or infrared light can pass or transmit largely unobstructed.

The present invention, by means of the inventive thermochromic plastic film, overcomes this drawback and in particular enables free transmission or passage of visible light through the inventive film while thermal radiation or infrared light, respectively, is selectively blocked, in particular preferably at higher temperatures, where protection of crops against too high temperature loads or too intense heat radiation, respectively, is specifically required.

Furthermore, it was surprisingly found, that the thermochromic properties of the nanoparticles, which are embedded in the layer A of the inventive plastic film, are not reduced, e.g. over time, but can be kept constant and unchanged. In theory, one would have expected, that the thermochromic effect or behavior of the nanoparticles would be reduced or disturbed due to the incorporation of the nanoparticles into a thermoplastic polymer material. This, however, is not the case and the thermochromic behavior of the thermochromic nanoparticles remains preferably fully developed.

Another particular advantage of the present invention can be seen in the fact, that the plastic film of the present invention preferably is configured transparent and colorless at all temperatures, so that e.g. crops covered by the film can ideally be supplied with the light relevant for their growth at all times. In particular, the inventive film is preferably configured such that it is temperature-dependent infrared light-reflective or transparent. Accordingly, the thermochromic effect or behavior of the film, and in particular of the thermochromic nanoparticles, proceeds outside the visible region of the electromagnetic spectrum, and thus does not go along with a visible color change. Based on this advantageous behavior, crops can be supplied freely with growth-relevant visible light and at the same time can be effectively protected against excessive, growth-retardant heat loads.

Accordingly, in the context of the present invention, it is preferably provided that the plastic film is transparent for visible light, in particular the visible region of the electromagnetic spectrum ranging from 400 to 700 nm.

This set forth, it is particularly preferred, if the plastic film is temperature-dependent transparent or reflective for infrared light, in particular near-infrared light, preferably the infrared region of the electromagnetic spectrum ranging from 700 to 1400 nm.

Likewise, it can be said, that the inventive plastic film preferably is temperature-dependent transparent or opaque for infrared light, in particular near-infrared light, preferably the infrared region of the electromagnetic spectrum ranging from 700 to 1400 nm. Accordingly, in the context of the present invention the terms `infrared light-reflective' and 'infrared light-opaque' can be used interchangeably to express the essential aspect that infrared light - at and/or above certain temperatures - is prevented from passing through the inventive plastic film.

As regards the thermochromic behavior of the inventive plastic film in more detail, it is furthermore preferably provided that the plastic film transits in particular at least partially from transparent or reflective for infrared light, in particular near-infrared light, preferably the infrared region of the electromagnetic spectrum ranging from 700 to 1400 nm, at a specific transition temperature.

More specifically, it has been proven advantageous, if the plastic film is transparent for infrared light, in particular near-infrared light, preferably the infrared region of the electromagnetic spectrum ranging from 700 to 1400 nm, at temperatures below the specific transition temperature.

Likewise, it is particularly preferred in the context of the present invention, if the plastic film is reflective or opaque for infrared light, in particular near-infrared light, preferably the infrared region of the electromagnetic spectrum ranging from 700 to 1400 nm, at temperatures above the specific transition temperature.

According to a further preferred embodiment of the present invention, it is envisioned, that the plastic film comprises at least one, in particular at least two, preferably at least three, specific transition temperatures. This means, that the plastic film is preferably configured such that it transits in particular at least partially from transparent or reflective for infrared light, in particular near-infrared light, preferably the infrared region of the electromagnetic spectrum ranging from 700 to 1400 nm, at at least one specific transition temperature, preferably at least two specific transition temperatures, preferentially at least three transition temperatures.

By way of example, according to the above preferred embodiment it is envisioned that an inventive plastic film with the described configuration e.g. has a first transition temperature of about 27 °C, a second transition temperature of about 32 °C and a third transition temperature of about 37 °C. A plastic film with this configuration can transit, specifically at least partially, from transparent to reflective for infrared light first when temperatures, in particular on the surface of the plastic film, surpass 27 °C. As a result, a distinctive portion, but not 100 %, of infrared light is reflected by the inventive plastic film.

If sunlight intensity and accordingly temperatures increase further and eventually surpass 32 °C, the plastic film transits, specifically further partially, from transparent to reflective for infrared light for a second time. On days with intense insolation, where temperatures, specifically on the plastic film surface, exceed even 37 °C, the inventive plastic film can transit again further from transparent to reflective for infrared light, reaching thus its maximum infrared light reflectivity.

By means of this advantageous working principle, the area covered by the inventive plastic film is gradually protected against infrared light, depending on the intensity of insolation and the development, i.e. increase, of temperatures, specifically on the film surface.

It is accordingly preferred, that the inventive plastic film is configured such, that the plastic film transits gradually from transparent or reflective for infrared light, in particular near-infrared light, preferably the infrared region of the electromagnetic spectrum ranging from 700 to 1400 nm.

Regarding further the transition temperature, it is in particular envisioned in the context of the present invention, that the transition temperature constitutes the point, at which the thermochromism of the inventive plastic film displays, i.e. the plastic film switches, in particular at least partially, from infrared light-transmissive to infrared light-reflective or -opaque and vice versa. Particularly good results are obtained in the context of the present invention, if the transition temperature lies in a range of from 10 to 60 °C, in particular 15 to 55 °C, preferably 18 to 50 °C, more preferably 20 to 45 °C, most preferably 21 to 40 °C.

Furthermore, it is particularly preferred in the context of the present invention, that the specific transition temperature or temperatures of the inventive plastic film is sharply defined and narrowly distributed. This means that, besides lying within a broader range, the thermochromism or thermochromic properties, respectively, of the inventive plastic film preferably develop almost instantaneously upon surpassing or falling below the respective transition temperature. In this sense, the transition temperature can also be understood to be almost a transition point, at which the inventive plastic film preferably changes instantaneously or immediately between infrared light-transparent and -reflective or -opaque in an entirely reversible manner.

In accordance with this principle, it is particularly preferred in the context of the present invention, that the thermochromic effect of the inventive plastic film displays within a temperature region or difference of rom 1 to 2 °C around, i.e. above or below, the specific transition temperature of the plastic film. On this basis, it can advantageously be ensured, that in particular the change or switch in-between properties, i.e. from infrared light-transparent to -reflective or opaque and vice versa, proceeds within a very short time as well as evenly over the entire area of the inventive plastic film.

With regard to the temperatures at which the temperature-dependent behavior of the inventive plastic film preferably develops, it has been proven advantageous, if the plastic film is transparent for infrared light at temperatures of up to 50 °C, in particular 45 °C, preferably 40 °C, more preferably 35 °C, particularly preferably 30 °C.

Likewise, it is particularly preferred in the context of the present invention, if the plastic film is reflective for infrared light at temperatures of more than 50 °C, in particular 45 °C, preferably 40 °C, more preferably 35 °C, particularly preferably 30 °C.

As regards the upper limit up to which the plastic film is reflective for infrared light, this is usually determined by the material or composition of the thermochromic plastic film, i.e. the plastic material used as well as the composition of the thermochromic nanoparticles. In particular, it is preferably provided in the context of the present invention, that the plastic film is reflective for infrared light at temperatures of up to 110 °C, in particular 120°C, preferably 130 °C. These temperatures particularly mark the melting points or regions of the plastic materials used in the inventive film. The thermochromic nanoparticles, however, stay intact at these temperatures and can endure even higher temperatures. In particular, it is preferred that the thermochromic nanoparticles stay intact, i.e. solid, at temperatures of up to more than 1000 °C, in particular more than 1500 °C.

Accordingly, it is advantageously ensured in the context of the present invention, that the inventive plastic film operates reliably and stably throughout all regions or stages of naturally occurring temperatures.

Focusing further on the working principle of the inventive plastic film, it is provided in particular, that the thermochromic properties, in particular the temperature-dependent transparency and reflectivity or opacity, respectively, for infrared light of the plastic film, are generated by means of the thermochromic nanoparticles.

Accordingly, the above described thermochromic properties and thermochromic behavior can in particular be attributed to the thermochromic nanoparticles, which are embedded in the layer A of the inventive plastic film; i.e., the preferred transition temperatures stated above are in particular related to the thermochromic nanopartides contained in the inventive plastic film.

Therefore, it is particularly preferred in the context of the present invention, if the thermochromic nanoparticles are transparent for visible light and temperature-dependent transparent or reflective for infrared light or thermal radiation, respectively.

The respective transition temperature for the change or switch in the temperature-dependent properties, i.e. the infrared light-transparency or -reflectivity, of the thermochromic nanoparticles preferably lies in a range from 10 to 60 °C, in particular 15 to 55 °C, preferably 18 to 50 °C, more preferably 20 to 45 °C, most preferably 21 to 40 °C, and is furthermore preferably sharply defined and narrowly distributed. Hence, it is particularly preferred for the thermochromic nanoparticles, if the switch or change between the temperature-dependent states, i.e. infrared light-transparent or -reflective, proceeds within a small temperature range, e.g. within a temperature difference of 1 to 2 °C of the specific transition temperature of the thermochromic nanoparticles.

The thermochromic nanoparticles as well as the thermochromic plastic film according to the present invention, overall, preferably are configured such that at lower temperatures, i.e. temperatures below the above-mentioned preferred temperature ranges for the transition temperature, the thermochromic nanoparticles as well as the thermochromic plastic film are transparent for visible light as well as infrared light. Both kinds of radiation can pass through the plastic film freely in this state and supply for example crops, which are covered with the inventive plastic film, ideally with growth-relevant visible light as well as appropriate portions of thermal radiation to achieve optimum growth conditions and temperatures.

However, at elevated or high temperatures, i.e. temperatures above the above-mentioned preferred temperature ranges for the transition temperature, the thermochromic nanoparticles as well as the inventive thermochromic plastic film preferably take a configuration and/or are configured such that the thermochromic nanoparticles as well as the inventive plastic film are transparent for visible light and reflective or opaque for infrared light. As was described above, it is preferred in this context, if the switch or transition from infrared light-transmissive to -reflective or -opaque proceeds gradually and/or in a continuous manner. By means of this particular working principle, for example crops, which are covered with the inventive plastic film, are protected effectively against excessive thermal radiation and heat stress while the crops are supplied unchanged and unobstructed with growth-relevant visible light.

As regards, the composition of the thermochromic nanoparticles preferably used in the context of the present invention, it has been proven advantageous, if the thermochromic nanoparticles comprise inorganic, in particular metallic, preferably transition metallic, materials.

Particularly good results are obtained in the context of the present invention, if the thermochromic nanoparticles comprise or in particular consist of metal-insulator- or metal-semiconductor-transition materials. This means, that the nanoparticles preferably comprise transition metallic properties and/or act as insulators at temperatures below their transition temperature and comprise metallic properties and/or act as metallic conductors at temperatures above their transition temperature.

The thermochromic nanoparticles preferred in the context of the present invention, thus, can switch or change entirely reversibly and passively between a metallic state, at which the particles are conductive, and a transition metallic state, at which the particles are insulators or at least semiconductors. The respective point, where this switch or change proceeds, is defined as the transition temperature of the thermochromic nanoparticles
The thermochromic behavior of nanoparticles, that are preferred in the context of the present invention, relies in particular on a reversible change of the crystal structure of the nanoparticles. This crystal structure change does not only lead to changes regarding the conductivity of the nanoparticles, but also to a change in their interaction with infrared light or thermal radiation, respectively. Advantageously, the thermochromic nanoparticles can reversibly and freely change between an infrared-transparent and infrared-reflective state, wherein this behavior is completely material-inherent and occurs entirely passively, i.e. without an extra input of electric energy or the like.

Further regarding the composition or material of thermochromic nanoparticles preferably used in the present invention, it has been proven advantageous, if the thermochromic nanoparticles comprise vanadium, preferably a vanadium oxide, more preferably vanadium dioxide.

Vanadium dioxide nanoparticles constitute an ideal phase-transition material, which undergoes a significant change in physical properties at a specific transition temperature of 68 °C for pure vanadium dioxide particles. Below 68 °C, vanadium dioxide particles are present in the monoclinic phase which changes to the rutile-phase above 68 °C. On the basis of this temperature-dependent change or switch of the crystal structure, vanadium dioxide nanoparticles show different physical properties at different temperatures, which specifically includes the interaction of the nanoparticles with infrared light. Thus, at temperatures below 68 °C, the nanoparticles are transparent for visible light as well as infrared light, whereas the particles are transparent for visible light and reflective or opaque for infrared light at temperatures above 68 °C. Against this backdrop, thermochromic nanoparticles preferentially used in the context of the present invention comprise, in particular consist of, vanadium dioxide.

The transition temperature of pure vanadium dioxide nanoparticles, however, can be relatively high for e.g. agricultural applications, as common crops usually cannot withstand temperatures in a range of about 68 °C undamaged over time. In the context of the present invention, it is therefore further preferred, if the transition temperature of the thermochromic nanoparticles is modified, in particular lowered. A modification and in particular a reduction of the transition temperature of the thermochromic nanoparticles can be achieved by means of doping.

Thus, good results are obtained in the context of the present invention, if the thermochromic nanoparticles comprise dopants. In this regard, dopants are understood to be impurities added to a material, e.g. a semiconductor, in a controlled manner, wherein the amount of impurity - or dopant - added to the intrinsic or pure material, commonly varies its level of conductivity, which can likewise influence the transition temperature of phase-transition materials.

If dopants are incorporated into the thermochromic nanoparticles, particularly good results are obtained in the context of the present invention, if the nanoparticles are doped with non-metallic dopants and/or transition-metalllic dopants. Particularly preferred dopants are selected from the group consisting of tungsten, niobium, tantalum, molybdenum, titanium, zirconium, hafnium, magnesium, copper, nickel, cobalt, chromium, aluminum, hydrogen, lithium, scandium, yttrium, germanium, or silicon, gold and/or mixtures thereof.

According to a particularly preferred embodiment of the present invention, the thermochromic nanoparticles, comprising in particular vanadium dioxide, are doped with tungsten. By means of doping vanadium dioxide nanoparticles with tungsten, the transition temperature for the change or switch between the infrared-transparent and the infrared-reflective or -opaque state of the nanoparticles can be lowered below the transition temperature of pure vanadium dioxide nanoparticles.

It is even further preferred, if the transition temperature of the thermochromic nanoparticles is lowered to ambient temperatures, in particular to temperatures in a range from 20 to 45 °C, in particular 21 to 40 °C. Thermochromic nanoparticles with a transition temperature in the aforementioned range are particularly suitable for use in the inventive plastic films, which in turn are ideally suited for agricultural application.

According to a further advantageous embodiment of the resent invention, the transition temperature of the thermochromic nanoparticles, in particular comprising vanadium dioxide, can be modified, in particular lowered, in dependence of the amount of dopant comprised in the nanoparticles. Good results are obtained in this context, if the thermochromic nanoparticles comprise the dopant in amounts of more than 6 wt.%. As regards the upper limit for the addition of dopants to the thermochromic nanoparticles, it is preferred, that the thermochromic nanoparticles comprise the dopant in amounts of less than 30 wt.%, in particular less than 20 wt.%., preferably less than 15 wt.%.

In the context of the present invention, it is particularly preferred further, if the thermochromic nanoparticles comprise, in particular consist of, vanadium dioxide and tungsten as dopant, in particular wherein the nanoparticles comprise tungsten in an amount of from 6 to 30 wt.%, in particular 6 to 20 wt.%, preferably 6 to 15 wt.%, based on the nanoparticle.

If tungsten-doped vanadium dioxide nanoparticles are used in the context of the present invention, it has further been proven advantageous, if the nanoparticles are doped with W⁶⁺. To achieve doping with W⁶⁺, the vanadium dioxide can for example be treated with WO₃. By means of W⁶⁺-doping, donor-type defects are formed in the vanadium dioxide lattice which advantageously contributes to both an increase in conductivity as well as a decrease in transition temperature of the resulting nanoparticles. Depending on the amount of tungsten, in particular W⁶⁺, inserted into the vanadium dioxide, in particular the vanadium dioxide lattice, the aforementioned effects are more or less pronounced.

In addition, co-doping with e.g. gold can further influence, i.e. decrease, the transition temperature of the vanadium dioxide nanoparticles, so that overall a fine gradation of the transition temperature of the nanoparticles used in the inventive plastic films can be achieved. Hence, it can be preferred in the context of the present invention, if the thermochromic nanoparticles comprise, in particular consist of, vanadium dioxide and tungsten and gold as dopants, in particular wherein the nanoparticles comprise tungsten and gold in a combined amount of from 6 to 30 wt.%, in particular 6 to 20 wt.%, preferably 6 to 15 wt.%, based on the nanoparticle.

Overall, it is preferably possible in the context of the present invention, to regulate and/or determine the transition temperature of the thermochromic nanoparticles, in particular by means of dopants and/or the amount of dopants added to the nanoparticles. Based on of this mechanism or working principle, it is furthermore specifically possible to broaden the application range and range of functions of the inventive plastic film, as will be described in more detail below.

More details on the thermochromic nanoparticles that are preferably used for the inventive plastic film in the context of the present invention as well as methods for their production are described in US patent US 10,160,660 B1.

According to the present invention, it is further provided that the thermochromic nanoparticles are stabilized against oxidation. It is a particular advantage of the inventive plastic film that the naturally oxidation-sensitive nanoparticles can be stabilized effectively against oxidative processes so that a plastic film with reliable functionality and good longevity can be provided.

Good results are obtained in this context, if the thermochromic nanoparticles are stabilized against oxidation by means of an oxidation barrier, wherein the oxidation barrier is arranged around the nanoparticles, wherein, the oxidation barrier is provided in the form of a layer, in particular a layer arranged around the thermochromic nanoparticles and/or arranged on either side of the layer A.

If the oxidation barrier layer is arranged around the thermochromic nanoparticles, it is preferably envisioned that the oxidation barrier layer is provided in the form of a coating.

Nanoparticles comprising an oxidation barrier coating can also be perceived as encapsulated or coated nanoparticles, and in particular as core-shell nanoparticles. By means of the coating it is advantageously achieved, that the oxidation sensitive material the nanoparticles are composed of is shielded from in particular oxygen, so that oxidation of the core material is efficiently prevented.

Likewise, it is possible to modify the surface properties of the nanoparticles, i.e. the particles can e.g. be hydrophobized by means of the coating which in turn can positively influence the integrability of the particles into the thermoplastic polymer of the layer A. The use of coated thermochromic nanoparticles, accordingly, is linked with different advantages and can therefore preferred be considered in the context of the present invention.

The coating of the thermochromic nanoparticles may be obtained from a sol-gel process or the like. It can comprise, in particular consist of, inorganic oxides, in particular wherein the inorganic oxides are obtained from a sol-gel process, i.e. the thermochromic nanoparticles can comprise an inorganic coating. Exemplarily, the coating may comprise silicon dioxide and/or may be obtained from, in particular organically modified, silanes, siloxanes and or silicates. Alternatively, coatings comprising titanium dioxide, zirconium dioxide of hafnium dioxide can be used.

Alternatively, the coating of the thermochromic nanoparticles can also be obtained from a polymerization process, in particular from emulsion polymerizations. In this case, the thermochromic nanoparticles comprise an organic coating. This can be in particular advantageous for the integration of the nanoparticles in the layer A, since the surface hydrophobicity of the articles is lowered by means of the organic coating. Respective coatings may contain poly vinyl alcohol (PVA), poly(acylic acid) (PAA), polymethacrylate (PMA), polymethylmethacrylate (PMMA), poly(hydroxyethylmethacrylate) (PHEMA), polyacrylamides, ethylene-vinyl acetate (EVA), ethylene-butyl acrylates (EBA), and copolymers and/or mixtures thereof, and/or may be obtained from polymerizations of vinyl alcohols (VA), acrylic acids (AA) like butylacrylate (BA), methacrylate (MA), methylmethacrylate (MMA), acrylic amides, hydroxyethyl methacrylate (HEMA), vinyl acetates (VA), olefins like ethylene, alone or in mixture with one another.

The polymerization process can further be influenced positively be means of cross-linking agents like 1,4-butanediol diacrylate (BDDA), which contribute to the formation of a dense coating. To stabilize the polymerization solution, colloidal silica and/or methylcellulose can be added. As initiator for the polymerization, thermal initiators like AIBN are preferred. Finally, the coated particles can be isolated from the polymerization reaction by means of spray drying and/or freeze drying.

More precisely, thermochromic nanoparticles with an organic coating, by way of example, can be obtained from the preferred procedure described in the following.

According to the example, the organic coating or particle shell, respectively, is synthesized from methyl methacrylate and 1,4-butanediol diacrylate as a cross-linker. The composition of the monomer mixture is determined by the required optical properties of the coating to be formed. In particular, the particle coating or shell is configured to exhibit a high transparency for solar light and a refractive index adapted to the thermoplastic polymer used in the layer A. Additionally, a more polar monomer is needed to increase the stability of the particles and to improve the compatibility with the polymeric matrix. Methacrylic acid and 2- hydroxyethyl methacrylate are used in this context.

For the preparation of the nanoparticles coated as is described above, a radical oil-in-water (o/w) miniemulsion polymerization is carried out. Therefore, the vinyl monomers methyl methacrylate (MMA), methacrylic acid (MA), and 1,4-butandiol diacrylate (BDDA, cross-linking agent) are used to create a cross-linked polymer coating. A stable o/w emulsion is formed by using high-pressure homogenization by means of a two-step homogenizing valve and a liquid flow rate of 22 L/h. The resulting droplets are stabilized in water by means of a mixture of colloidal silica and methylcellulose solution as surfactants. AIBN (2,2'-azobis[isobutyronitrile], 2 % relative to the monomer mass) is used as a thermal radical initiator. After polymerization (1 h 70 °C and 2 h 85 °C), the coated thermochromic nanoparticles (including surfactants) are separated from water by spray or freeze-drying yielding a colorless, dry and free-flowing powder.

Spray-drying is performed with a mini spray dryer with an inlet temperature of 135 °C and an outlet temperature of between 70 to 80 °C. Freeze drying is performed for samples of the reaction mixture provided in metal cups or flasks with a freeze dryer over approx. 2 to 3 h at -27 °C (freeze drying step), 64 h at 15 °C and 0.37 bar (main drying step) and 2 h at 15 °C and 0.08 bar (final drying).

By means of the aforementioned coating materials it is specifically possible to improve the oxidation stability of the thermochromic nanoparticles preferably used in the context of the present invention, while the thermochromic properties of the nanoparticles remain intact and unaffected, which accounts likewise for pure as well as doped nanoparticles. The coatings preferably used in the context of the present invention are furthermore transparent, when applied to the nanoparticles, and display a refractive index that is well in accordance with the refractive index of the layer A and in particular the material the layer A is composed of.

Thus, in the context of a very preferred embodiment of the present invention, the layer A of the plastic film comprises a thermoplastic polymer in which coated thermochromic nanoparticles are embedded. The coated nanoparticles can be integrated easily into the thermoplastic polymer the layer A comprises, so that in the context of this specific embodiment of the present invention high-performance plastic films can advantageously be obtained in an efficient and sophisticated manner.

Alternatively and/or additionally to an oxidation barrier layer that is arranged around the thermochromic nanoparticles, it is envisioned in the context of a further preferred embodiment of the present invention, that the oxidation barrier is provided in the form of a layer arranged on either side of the layer A.

According to this embodiment, it is preferably provided, that the plastic film comprises further layers B, in particular at least two layers B, preferably wherein the layers B are arranged on either side of the layer A. Furthermore, it is particularly preferred in this regard, if the layers B have oxygen protective properties, in particular act as an oxygen barrier. More preferred aspects and details on the layers B are explained further below.

Regarding first the layer A further, the thermochromic nanoparticles, as was stated above, are embedded in a thermoplastic polymer, which forms part, preferably constitutes, the layer A of the inventive plastic film. According to a particular advantage of the present invention, the embedment of the thermochromic nanoparticles in a thermoplastic polymer allows for a broad range of possible new applications of thermochromic nanoparticles.

Thermochromic nanoparticles, comprising in particular vanadium dioxide, could so far only be incorporated into aqueous-based polymer emulsions, which then can be applied like paints in the form of thin, liquid films onto a substrate. However, the high surface polarity or energy of the nanoparticles leads to difficulties regarding the emulsion or dispersion stability of the respective paints, so that in particular an even distribution of the nanoparticles in the polymer emulsion of the films resulting therefrom is complicated to provide and ensure.

In the context of the present invention, however, this drawback is overcome by means of embedding the nanoparticles in a thermoplastic polymer. This can in particular be performed while producing the layer A, which preferably is done via an extrusion process. In this case, the nanoparticles can be added and/or be incorporated into the layer A during the extrusion process homogeneously.

As regards the composition of the thermoplastic polymer in which the thermochromic nanoparticles are embedded in, this can vary within a wide range. However, in the context of the present invention, particularly good results are obtained if the thermoplastic polymer comprised in layer A comprises, in particular consists of, polymers or copolymers of polyethylene (PE), in particular low-density polyethylene (LDPE) and/or linear low-density polyethylene (LLDPE), ethylene-butyl acrylate (EBA), ethylene-vinyl acetate (EVA) or mixtures thereof, preferably ethylene-vinyl acetate (EVA), more preferably with high vinyl-acetate (VA) content.

Advantageously, the aforementioned thermoplastic polymers can all be extruded to plastic films or respective layers of plastic films by means of common procedures, so that the inventive plastic film can be obtained from a relatively uncomplicated production process.

According to a preferred embodiment of the present invention, it is envisioned, that the layer A comprises only one type or kind of thermochromic nanoparticles. This means, that the nanoparticles comprised in the layer A all have - within the standard deviation - the same composition, e.g. comprise undoped vanadium dioxide or vanadium dioxide doped with a distinctive amount of a dopant, for example tungsten. Likewise, the thermochromic nanoparticles can be coated or uncoated. In any case, it is particularly envisioned, that the thermochromic nanoparticles are distributed evenly and homogeneously in the respective layer. On this basis, a reliable and constant thermochromic behavior of the plastic film can be achieved by means of the layer A and in particular the nanoparticles contained therein.

According to an alternatively preferred embodiment of the present invention, it may be envisioned, that the layer A comprises more than one type or kind of thermochromic nanoparticles. A layer A with this configuration for example can contain a mixture of different nanoparticles, which e.g. comprise different materials, and are coated or uncoated and/or doped, in particular in varying amounts, or undoped. For example, the different thermochromic nanoparticles can comprise, in particular coated, undoped vanadium dioxide and/or one or more types or kinds of doped vanadium dioxide, wherein furthermore the dopant or the amount of dopant comprised in the nanoparticles may vary.

A layer A with this particular configuration can display a much broader range of properties. In particular, the thermochromic properties of the layer can be configured to display continuingly and/or gradually, meaning that the transition between infrared light-transmissive and infrared light-reflective or -opaque proceeds in a more fluent way instead of e.g. on/off-wise.

It is further preferrable in this regard, that the different types or kinds of nanoparticles are applied as a homogenous mixture and that the mixture is distributed homogeneously in the layer A. A layer A with this particular configuration can be suited specifically for applications where light conditions change rather constantly and thus ideally require the plastic film to continuingly adapt to varying infrared light intensities and/or temperatures. As a result of the beneficial configuration of the layer A, variations in the infrared light intensity can be evened out to provide e.g. crops with a constant and adequate amount of infrared radiation and thus, adequate temperatures.

Regarding the assembly of the inventive plastic film, it is further preferably provided, that the layer A forms the inner core of the inventive plastic film, when the plastic film comprises further layers.

In the context of a preferred further development of the plastic film assembly, it is provided that the layer A is arranged such that several layers A are located inside, in particular form the inner core of, the plastic film. This means, that at least two layers, e.g. A1 and A2, are provided, where the thermochromic properties or thermochromic nanoparticles, respectively, are present.

If several layers A are contained in the inventive plastic film, it is particularly preferred, that the several layers A comprise different types or kinds of thermochromic nanoparticles from layer to layer. This means, that each layer A comprises only one kind of thermochromic nanoparticles, wherein the type or kind of nanoparticles varies between the layers A. For example, the from layer to layer different thermochromic nanoparticles can comprise different materials, and can be coated or uncoated and/or doped, in particular in varying amounts, or undoped. In the context of this preferred embodiment of the present invention it is again possible to provide a plastic film with thermochromic properties that display gradually and continuingly in dependence of the intensity of incoming infrared light and/or temperature.

For example, the several layers A of an exemplary inventive plastic film can be configured such that a first layer A1 contains nanoparticles with a transition temperature of about 35 to 40 °C, a second layer A2 contains nanoparticles with a transition temperature of about 30 to 34 °C, and a third layer A3 contains nanoparticles with a transition temperature of about 25 to 29 °C.

This can for example be provided by means of integrating thermochromic nanoparticles comprising e.g. differentially doped vanadium dioxide in the layers A1 to A3. The layer A1 for example can comprise vanadium dioxide nanoparticles with a smaller amount of dopant, e.g. tungsten, the layer A2 can comprise vanadium dioxide nanoparticles doped with a higher amount of tungsten, and the layer A3 can for example comprise vanadium dioxide nanoparticles doped with tungsten and a further co-dopant. Likewise, it is of course also possible to use other thermochromic nanoparticles in the layers A1 to A3, e.g. regarding the material and/or presence of a coating and/or a dopant.

Under moderate conditions, i.e. moderate temperature and infrared light intensity, only the nanoparticles in layer A3 surpass the transition temperature to switch from infrared light-transmissive to infrared light-reflective or opaque. Hence, only a portion in infrared light is reflected in parts of the plastic film. With increasing light intensity and/or thermal radiation, the nanoparticles in layer A2 and last, layer A1 successively surpass the respective transition temperatures, so that the plastic film gradually turns more and more reflective for infrared light until achieving its maximum reflectivity.

In this regard, it has generally been found advantageous in the context of the present invention, if the inventive plastic film, in the infrared light-reflective or opaque configuration, reflects infrared light in amounts of from 15 to 70 %, in particular 20 to 65 %, preferably 25 to 60 %, more preferably 30 to 50 %, based on the total amount of incoming infrared light.

If the inventive plastic film furthermore is configured such, that the plastic film transits gradually from transparent or reflective for infrared light, it is further preferred, that the inventive plastic film, in the infrared light-reflective or opaque configuration, reflects gradually increasing amounts of infrared light, in particular in a range of from 2 to 20 % upon surpassing the first transition temperature and/or from 15 to 30 % upon surpassing the second transition temperature and/or from 20 to 50% upon surpassing the third transition temperature.

Referring to the above example, it may for example be envisioned, that the inventive plastic film by means of the thermochromic nanoparticles reflects infrared light in an amount of 5 % upon surpassing the transition temperature of the thermochromic nanoparticles comprised in the layer A3, upon surpassing the transition temperature of the layer A2 reflects 15 % of the incoming infrared light, and upon surpassing the transition temperature of the layer A1 reflects 30 % of the incoming infrared light.

However, once the infrared light intensity and temperature load decrease and the transition temperature of the nanoparticles is fallen short of, the nanoparticles switch back to infrared light transmissive. On this basis, crops covered by the inventive plastic film can ideally be supplied with adequate amounts of infrared light to keep the crops well-tempered while at the same time sun burns or the like can be avoided efficiently.

With respect to the present invention, according to which the oxidation barrier is provided in the form of a layer arranged on either side of the layer A, i.e. wherein the plastic film preferably comprises further layers B, in particular at least two layers B, preferably wherein the layers B are arranged on either side of the layer A and/or have oxygen protective properties, it is thereby possible to effectively protect the layer A, and in particular the thermochromic nanoparticles comprised therein, against environmental influences and specifically against oxidation by means of atmospheric oxygen or comparable environmental oxidizing agent. The layers B can be understood in particular as sealing the layer A against external influences. The inventive plastic film can display high resilience, durability and longevity in addition to the advantageous sunlight-management and protection properties on this basis.

The aspect, that the thermochromic nanoparticles, which are embedded in the layer A, can be effectively protected against oxidation, for example by means of atmospheric oxygen or comparable environmental oxidative agents, on the basis of the layers B, constitutes a further particular advantage of the present invention. The high oxidation sensitivity of the thermochromic nanoparticles usually leads to complications in terms of preserving the functionality of the thermochromic nanoparticles and achieving a reasonable life-time and longevity of the nanoparticles and/or films or layers that comprise the thermochromic nanoparticles. This accounts in particular for nanoparticles that comprise, in particular consist of, preferably doped, vanadium dioxide.

However, by means of the present invention, in particular the inventive arrangement and set up of the layers of the plastic film according to this preferred embodiment, the drawbacks relating to the oxidation sensitivity of the thermochromic nanoparticles can be overcome. The thermochromic nanoparticles embedded in the thermoplastic polymer matrix can be conserved efficiently and reliably by means of the at least two further layers B, in particular on the basis of their oxidation protective properties.

For this purpose, it has been found to be particularly advantageous, if the layers B comprise, in particular consist of, polymers or copolymers of ethylene vinyl alcohol (EVOH).

By using these materials, it is in particular ensured that oxidizing substances from the environment, in particular atmospheric oxygen, are prevented from reaching the layer A which comprises the thermochromic nanoparticles. Harmful influences, i.e. oxidants that could react with the thermochromic nanoparticles and thus lower the thermochromic properties, can be effectively shielded off. This preferably results in a reliable functionality and enhanced longevity of the layer A as well as the entire plastic film.

According to a further preferred embodiment of the present invention it may be provided that the plastic film has a multilayer structure, in particular is a multilayer coextruded film. In this regard, it is preferably provided, that that the plastic film has a three-layer structure, in particular is a three-layer coextruded film, wherein the film comprises the following sequence of layers:

| | |
|---|---|
| Layer B1: | layer having oxygen protective properties comprising, in particular consisting of, polymers or copolymers of EVOH, |
| Layer A1: | core layer comprising, in particular consisting of, a thermoplastic polymer, preferably selected from the group consisting of LDPE, LLDPE, EVA, EBA or mixtures thereof, more preferably EVA, particularly preferably with high VA content, in which thermochromic nanoparticles are embedded, |
| Layer B2: | layer having oxygen protective properties comprising, in particular consisting of, polymers or copolymers of EVOH, |

in particular wherein the layers B1 and B2 comprise a similar or from another different composition.

As explained above with regard to the layer A, it is possible in the context of the present invention that the layer A, in particular A1, comprises thermochromic nanoparticles of only one kind or type or likewise of more than one kind or type.

If the layer A is configured such that the layer comprises in particular only one kind or type of nanoparticles, it may according to a further preferred embodiment of the present invention be provided, that the plastic film has an at least four-layer structure, in particular is an at least four-layer coextruded film, wherein the film comprises the following sequence of layers:

| | |
|---|---|
| Layer B1: | layer having oxygen protective properties comprising, in particular consisting of, polymers or copolymers of EVOH, |
| Layer A1: | first core layer comprising, in particular consisting of, a thermoplastic polymer, preferably selected from the group consisting of LDPE, LLDPE, EVA, EBA or mixtures thereof, more preferably EVA, particularly preferably with high VA content, in which a first kind or type of thermochromic nanoparticles is embedded, |
| Layer A2: | second core layer comprising, in particular consisting of, a thermoplastic polymer, preferably selected from the group consisting of LDPE, LLDPE, EVA, EBA or mixtures thereof, more preferably EVA, particularly preferably with high VA content, in which a second kind or type of thermochromic nanoparticles is embedded, |
| Layer B2: | layer having oxygen protective properties comprising, in particular consisting of, polymers or copolymers of EVOH, |

in particular wherein the layers B1 and B2 comprise a similar or from another different composition, and in particular wherein the plastic film optionally comprises further layers A, in which a further kind or type of thermochromic nanoparticles is embedded.

Furthermore, if the plastic film comprises more than one layer A, it has been proven advantageous, if additional layers B are integrated into the inventive plastic film. Accordingly, in the context of another preferred embodiment of the present invention, it is in in particular envisioned, that the plastic film has an at least five-layer structure, in particular is an at least five-layer coextruded film, wherein the film comprises the following sequence of layers:

| | |
|---|---|
| Layer B1: | layer having oxygen protective properties comprising, in particular consisting of, polymers or copolymers of EVOH, |
| Layer A1: | first core layer comprising, in particular consisting of, a thermoplastic polymer, preferably selected from the group consisting of LDPE, LLDPE, EVA, EBA or mixtures thereof, more preferably EVA, particularly preferably with high VA content, in which thermochromic nanoparticles are embedded, |
| Layer B0: | layer having oxygen protective properties comprising, in particular consisting of, polymers or copolymers of EVOH, |
| Layer A2: | second core layer comprising, in particular consisting of, a thermoplastic polymer, preferably selected from the group consisting of LDPE, LLDPE, EVA, EBA or mixtures thereof, more preferably EVA, particularly preferably with high VA content, in which thermochromic nanoparticles are embedded, |
| Layer B2: | layer having oxygen protective properties comprising, in particular consisting of, polymers or copolymers of EVOH, |

in particular wherein the layers B0, B1 and B2 comprise a similar or from another different composition, and in particular wherein the layers A1 and A2 comprise thermochromic nanoparticles of only one kind or type or of more than one kind or type, and in particular wherein the plastic film optionally comprises further layers A, and optionally further layers B that separate the layers A.

Regarding the thermochromic nanoparticles comprised in the layer A, these are usually not coated, if the inventive plastic film comprises a layer B. However, e.g. in case of applications envisioned for exceptionally harsh conditions, like in maritime regions with strong winds, salt water exposure and intense insolation, it may be preferrable, if the thermochromic nanoparticles comprised in the layer A additionally are surface coated and in particular surface-hydrophobized. This means, that respective plastic films comprise both, a layer B and coated nanoparticles. The aforementioned preferred embodiments of the inventive plastic film accordingly can be applied likewise on this specific embodiment of the present invention. The resilience and longevity of the thermochromic nanoparticles can be increased even further on this basis, so that overall very durably plastic films are obtained.

In the context of the present invention, it is further particularly preferred, if the plastic film comprises the above sequence of layers as inside layers, in particular core layers. This means that either the layer A or the above sequence of layers as an entity can be enclosed by further layers. Accordingly, it is preferably provided, that the plastic film comprises several further layers, e.g. further interlayers, outer layers, bonding layers or the like.

Good results can further be obtained in the context of the present invention, if the plastic film comprises further layers D, in particular at least one outer layer, preferably two outer layers, more preferably wherein the further, in particular outer, layer D is a sealing layer.

Here, it is particularly advantageous, if the further, in particular outer, layer D comprises, in particular consists of, materials selected from polyolefins, in particular selected from low-density polyethylene (LDPE), linear low-density polyethylene (LLDPE), ethylene-vinyl acetate (EVA) or mixtures thereof.

The above materials are in particular advantageous to use in the context of the present invention as these display high resiliencies and are able to withstand higher temperatures of up to 80 °C or even 90 °C, which is particularly important for applications of the inventive plastic films in summer and/or in regions with a generally intense insolation. In addition, the above-listed materials have thermoplastic properties, which in particular allows for processing these via extrusion or coextrusion processes which in particular facilitates an efficient manufacture of the inventive plastic films.

Also, it may be provided, that at least some layers of the plastic film are joined, in particular bonded, by means of a bonding layer C. In this regard, particularly good results are obtained in the context of the present invention, if the bonding layer C is configured in such a way that the layer C is preferably compatible with the polyolefinic material used for the layer D as well as the thermoplastic polymer comprised in the layer A or the oxygen barrier material used for the layer B, respectively.

According to a very preferred embodiment of the present invention it is e.g. preferably provided, that the plastic film has a seven-layer structure, in particular is a seven-layer coextruded film, wherein the film comprises the following sequence of layers:

| | |
|---|---|
| Layer D1: | outer layer, in particular sealing layer, comprising, in particular consisting of, materials selected from polyolefins, in particular selected from LDPE, LLDPE, EVA or mixtures thereof, |
| Layer C1: | bonding layer, |
| Layer B1: | layer having oxygen protective properties comprising, in particular consisting of, polymers or copolymers of EVOH, |
| Layer A1: | core layer comprising, in particular consisting of, a thermoplastic polymer, preferably selected from the group consisting of LDPE, LLDPE, EVA, EBA or mixtures thereof, more preferably EVA, particularly preferably with high VA content, in which thermochromic nanoparticles are embedded, |
| Layer B2: | layer having oxygen protective properties comprising, in particular consisting of, polymers or copolymers of EVOH, |
| Layer C2: | bonding layer, |
| Layer D2: | outer layer, in particular sealing layer, comprising, in particular consisting of, materials selected from polyolefins, in particular selected from LDPE, LLDPE, EVA or mixtures thereof, |

in particular wherein the layers B1 and B2 and/or C1 and C2 and/or D1 and D2 comprise a similar or from another different composition.

Particularly if the layer A comprises thermochromic nanoparticles that are coated, it can alternatively be envisioned, that the plastic film of the present invention comprises the above sequence without the layers B. This can account likewise for the following preferred embodiments of the inventive plastic film.

The above embodiment of the present invention is particularly preferred as it provides for very robust and endurable plastic films that are ideally suited for perennial use. The respective plastic films can withstand extreme weather ranging from very intense insolation to heavy rain and wind. At the same time, plastic films with a seven-layer structure in particular still show the inventive thermochromic properties in a reliable manner. Thus, crops covered with the inventive plastic film can be protected effectively and safely from intense thermal stress and high heat loads during hot seasons that otherwise would influence the growth of crops negatively. At the same time, the growth-relevant visible portions of the sunlight or solar radiation can transmit unobstructed through the inventive plastic film to supply crops in particular ideally with light.

The plastic film according to the aforementioned preferred embodiment likewise can comprise further layers A, wherein the further layers A comprise thermochromic nanoparticles of only one kind or type or likewise of more than one kind or type. Hence, it may be provided that the plastic film has an at least eight-layer structure, in particular is an at least eight-layer coextruded film, wherein the film comprises the following sequence of layers:

| | |
|---|---|
| Layer D1: | outer layer, in particular sealing layer, comprising, in particular consisting of, materials selected from polyolefins, in particular selected from LDPE, LLDPE, EVA or mixtures thereof, |
| Layer C1: | bonding layer, |
| Layer A1: | first core layer comprising, in particular consisting of, a thermoplastic polymer, preferably selected from the group consisting of LDPE, LLDPE, EVA, EBA or mixtures thereof, more preferably EVA, particularly preferably with high VA content, in which thermochromic nanoparticles are embedded, optionally |
| Layer B0: | layer having oxygen protective properties comprising, in particular consisting of, polymers or copolymers of EVOH, |
| Layer A2: | second core layer comprising, in particular consisting of, a thermoplastic polymer, preferably selected from the group consisting of LDPE, LLDPE, EVA, EBA or mixtures thereof, more preferably EVA, particularly preferably with high VA content, in which thermochromic nanoparticles are embedded, |
| Layer C2: | bonding layer, |
| Layer D2: | outer layer, in particular sealing layer, comprising, in particular consisting of, materials selected from polyolefins, in particular selected from LDPE, LLDPE, EVA or mixtures thereof, |

in particular wherein the layers B1 and B2 and/or C1 and C2 and/or D1 and D2 comprise a similar or from another different composition, and in particular wherein the layers A1 and A2 comprise thermochromic nanoparticles of only one kind or type or of more than one kind or type, and in particular wherein the plastic film optionally comprises further layers A, and optionally further layers B that separate the layers A.

This preferred assembly of several layers A can likewise be applied on the following, further preferred embodiments of the present invention.

According to a further preferred embodiment of the present invention, it may particularly be provided, that the plastic film has a nine-layer structure, in particular is a nine-layer coextruded film, wherein the film comprises the following sequence of layers:

| | |
|---|---|
| Layer D1: | outer layer, in particular sealing layer, comprising, in particular consisting of, materials selected from polyolefins, in particular selected from LDPE, LLDPE, EVA or mixtures thereof, |
| Layer C1: | bonding layer, |
| Layer B1: | layer having oxygen protective properties comprising, in particular consisting of, polymers or copolymers of EVOH, |
| Layer C3: | bonding layer, |
| Layer A1: | core layer comprising, in particular consisting of, a thermoplastic polymer, preferably selected from the group consisting of LDPE, LLDPE, EVA, EBA or mixtures thereof, more preferably EVA, particularly preferably with high VA content, in which thermochromic nanoparticles are embedded |
| Layer C4: | bonding layer, |
| Layer B2: | layer having oxygen protective properties comprising, in particular consisting of, polymers or copolymers of EVOH, |
| Layer C2: | bonding layer, |
| Layer D2: | outer layer, in particular sealing layer, comprising, in particular consisting of, materials selected from polyolefins, in particular selected from LDPE, LLDPE, EVA or mixtures thereof, |

in particular wherein the layers B1 and B2 and/or C1, C2, C3 and C4 and/or D1 and D2 comprise a similar or from another different composition.

For this preferred embodiment of the present invention, the robustness, resilience and longevity of the inventive plastic films can be increased even further.

In addition, it may further be provided in the context of a further preferred embodiment of the present invention, that the plastic film has a nine-layer structure, in particular is a nine-layer coextruded film, wherein the film comprises the following sequence of layers:

| | |
|---|---|
| Layer D1: | outer layer, in particular sealing layer, comprising, in particular consisting of, materials selected from polyolefins, in particular selected from LDPE, LLDPE, EVA or mixtures thereof, |
| Layer C1: | bonding layer, |
| Layer B1: | layer having oxygen protective properties comprising, in particular consisting of, polymers or copolymers of EVOH, |
| Layer A1: | core-like layer comprising, in particular consisting of, a thermoplastic polymer, preferably selected from the group consisting of LDPE, LLDPE, EVA, EBA or mixtures thereof, more preferably EVA, particularly preferably with high VA content, in which thermochromic nanoparticles are embedded, |
| Layer A0: | core layer comprising, in particular consisting of, LDPE, LLDPE, EVA, EBA or mixtures thereof, preferably EVA, more preferably with high VA content, |
| Layer A2: | core-like layer comprising, in particular consisting of, a thermoplastic polymer, preferably selected from the group consisting of LDPE, LLDPE, EVA, EBA or mixtures thereof, more preferably EVA, particularly preferably with high VA content, in which thermochromic nanoparticles are embedded, |
| Layer B2: | layer having oxygen protective properties comprising, in particular consisting of, polymers or copolymers of EVOH, |
| Layer C2: | bonding layer, |
| Layer D2: | outer layer, in particular sealing layer, comprising, in particular consisting of, materials selected from polyolefins, in particular selected from LDPE, LLDPE, EVA or mixtures thereof, |

in particular wherein the layers A1 and A2 and/or B1 and B2 and/or C1 and C2 and/or D1 and D2 comprise a similar or from another different composition.

According to this embodiment, in particular a thick core section comprising two layers A1 and A2, which comprise, in particular similar or different kinds or types of, thermochromic nanoparticles, is provided. This contributes in particular to a very effective and thorough temperature-dependent reflection of infrared light or radiation in case of temperatures that lie above the transition temperature of the thermochromic plastic film, in particular of the thermochromic nanoparticles. Accordingly, this specific application may be in particular suited for regions with very high insolation and hot temperatures.

As regards the installation and setup of the inventive plastic films, it has proven advantageous, if the plastic film is superimposed and welded with continuous or discontinuous welds on a conventional monolayer or multilayer greenhouse or low tunnel film.

Alternatively, it may also be provided, that at least one plastic film, preferably in the form of stripes, is welded along the length of the film on one or both surfaces of a conventional monolayer or multilayer greenhouse or low tunnel film.

Furthermore, in particular to ensure a reliable functionality of the inventive plastic films, it may be provided in the context of the present invention, that the layers, in particular the outer, preferably sealing, layer and/or the layer having oxygen barrier properties, comprise durability-extending additives, in particular comprise antioxidants, UV-radiation stabilizers, UV-absorbers or mixtures thereof.

The figures show according to
- Fig. 1: a greenhouse or a low tunnel mounted with the plastic film with thermo-chromic properties,
- Fig. 2: a greenhouse or a low tunnel mounted with the plastic film with thermo-chromic properties in the infrared light-reflective state,
- Fig. 3: a cross section of the layer A1 of a plastic film with coated thermochromic nanoparticles,
- Fig. 4: a cross section of a plastic film in the form of a three-layer structure, in particular three-layer coextruded film, with thermochromic nanoparticles of one kind or type,
- Fig. 5: a cross section of a plastic film in the form of a three-layer structure, in particular three-layer coextruded film, with thermochromic nanoparticles of three kinds or types,
- Fig. 6: a cross section of a plastic film in the form of a four-layer structure, in particular four-layer coextruded film, with two layers A comprising each thermochromic nanoparticles of one kind or type,
- Fig. 7: a cross section of a plastic film in the form of a five-layer structure, in particular five-layer coextruded film, with three layers A comprising each thermochromic nanoparticles of one kind or type,
- Fig. 8: a cross section of a plastic film in the form of a five-layer structure, in particular five-layer coextruded film, with two layers A comprising each thermochromic nanoparticles of one kind or type, and a separating layer B0,
- Fig. 9: a cross section of a plastic film in the form of a seven-layer structure, in particular seven-layer coextruded film,
- Fig. 10: a schematic depiction of the operating principle of the inventive plastic film,
- Fig. 11: a cross section of a plastic film in the form of a seven-layer structure, in particular seven-layer coextruded film, mounted on a conventional plastic film for greenhouses or low tunnels,
- Fig. 12: a cross section of two plastic films in the form of seven-layer structures, in particular seven-layer coextruded films, installed on both sides of a conventional plastic film for greenhouses or low tunnels,
- Fig. 13: a section of an inventive plastic film mounted on top of a conventional plastic film for greenhouses with discontinuous welds,
- Fig. 14: an inventive plastic film mounted on top of a conventional plastic film for greenhouses with discontinuous welds and a detail thereof,
- Fig. 15: stripes of an inventive plastic film mounted on top of a conventional plastic film for greenhouses a detail thereof.

Further subject-matter of the present invention - according to a **second** aspect of the present invention - is the use of an, in particular multilayer, plastic film according to the invention for, in particular perennial, agricultural applications, preferably in and/or on greenhouses or low tunnels, more preferably to improve crop growth.

For further details on the use in accordance with the present invention, reference is made to the above explanations on the inventive plastic film which apply accordingly to the inventive use.

The subject-matter of the present invention is explained in the following in a non-restrictive manner by means of the figures on the basis of preferred forms and embodiments of the subject-matter of the present invention.

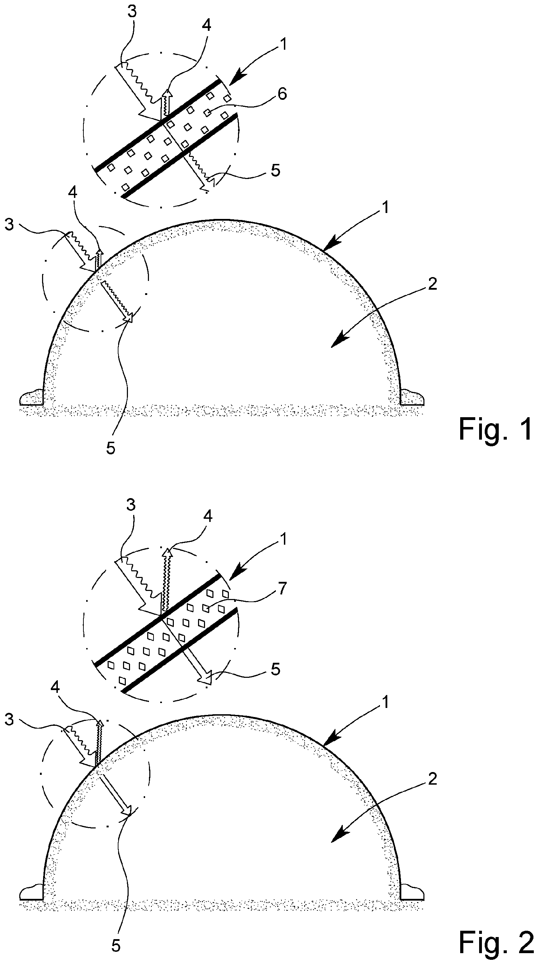

Fig. 1 shows an exemplary application of an inventive plastic film 1 with thermochromic properties. The plastic film 1 is mounted on a conventional greenhouse 2.

According to the exemplary embodiment depicted in Fig. 1, the plastic film 1 is configured such that it is transparent for most fractions of natural sunlight or solar radiation 3, in particular at temperatures of up to 50 °C, in particular 45 °C, preferably 40 °C, more preferably 35 °C, particularly preferably 30 °C. At these temperatures, the inventive plastic film 1 can be passed by radiation 5 of almost the entire electromagnetic spectrum. Only a distinctive, small amount 4 of radiation 3, i.e. thermal radiation or infrared light, may be reflected by the plastic film 1, e.g. to ensure, that crops in the greenhouse 2 are not confronted with too intense solar radiation or sunlight, respectively.

By this, the plastic film 1 can in particular achieve efficient light and warmth supply as well as decent shading of crops covered with the plastic film 1, which overall protects the crops in the greenhouse e.g. from sunburns and most of all benefits their growth and development.

In the context of the present invention, it is envisioned, that the plastic film 1 is configured such that thermochromic nanoparticles 6 are embedded in the film, specifically in a layer A of the plastic film, which more preferably constitutes also the inner core of the plastic film 1, when the plastic film comprises further layers.

At higher temperatures, it is preferably provided that the inventive plastic film 1 switches or changes its light-transmission behavior based on the thermochromic properties the plastic film 1 has.

In particular, the plastic film 1, and more preferably the thermochromic nanoparticles 6 comprised therein, switches or changes from infrared light-transparent to infrared light-reflective at higher temperatures, in particular at temperatures above the transition temperature of the thermochromic film 1, which e.g. may be reached during hot seasons and intense insolation with sunlight.

In Fig. 2, this state of the inventive plastic film 1 is depicted. Intense sunlight or solar radiation 3 shines on the plastic film 1, which according to Fig. 2 in mounted on a conventional greenhouse 2. Due to prevailing high ambient temperatures, the thermochromic nanoparticles 7 comprised in the plastic film 1 turn infrared light-reflective, so that the amount of radiation 4 that is reflected by the film 1 consists for the most part of infrared or thermal radiation. The remaining portions 5 of the solar radiation 3, i.e. visible light, however, can pass freely through the inventive film 1 so that crops in the greenhouse 2 can be supplied reliably and ideally with growth-relevant light while harmful effects from too intense infrared radiation and thermal stress can be prevented by means of the inventive film 1.

The thermochromic behavior of the nanoparticles 7 comprised in the inventive plastic film 1 relies in particular on a temperature-dependent, fully reversible and material inherent change of the crystal structure of the nanoparticles. For example, in the preferred case of, in particular doped, vanadium dioxide nanoparticles, the crystal structure of the nanoparticles corresponds to a monoclinic structure. At elevated temperatures, in particular temperatures above the transition temperature for, in particular doped, vanadium dioxide nanoparticles, the crystal structure of the nanoparticles changes or switches to a tetragonal structure. Based on this process, the interaction of the nanoparticles with radiation, in particular solar radiation, changes in particular such that the particles turn from infrared light-transparent, which is symbolized by the nanoparticles 6, to infrared light-reflective, for which the nanoparticles 7 account.

For visible light, however, the nanoparticles 6 or 7 are transparent, in particular regardless of the above-described processes on the molecular level. Advantageously, the transition between the two different crystal structures of the nanoparticles and, thus, the change in the interaction with light proceeds within a preferably sharply defined and narrowly distributed temperature range, which in particular ensures a quick and complete development of the thermochromic effect over the entire surface of the inventive film 1.

According the present invention, it has further been proven advantageous if the thermochromic nanoparticles 6 are stabilized against oxidation. The thermochromic nanoparticles 6 preferred in the context of the present invention are naturally oxidation-sensitive, so that stabilizing the nanoparticles 6 contributes to the provision of plastic films 1 with reliable functionality and good longevity.

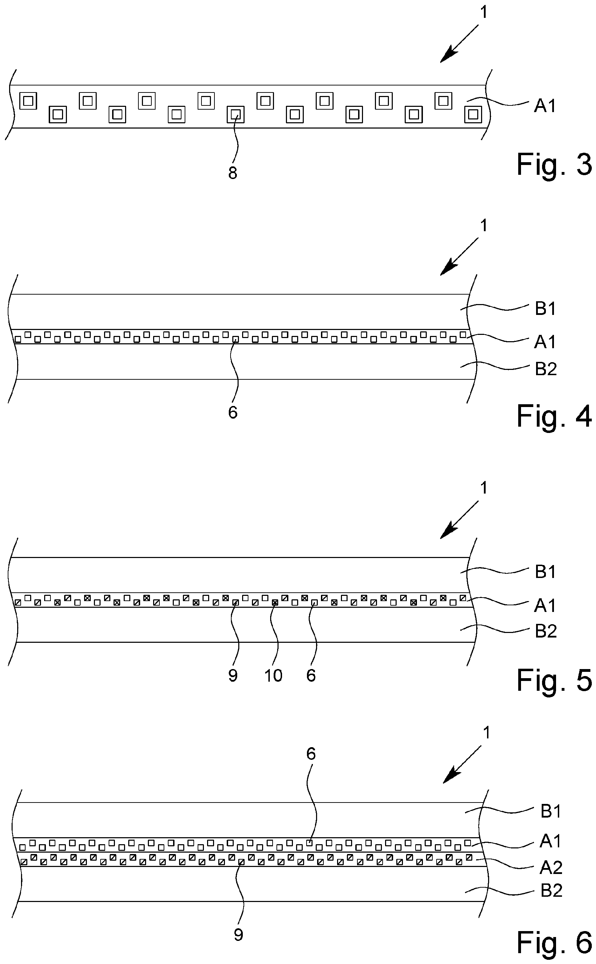

The thermochromic nanoparticles 6 are stabilized against oxidation by means of an oxidation barrier, wherein the oxidation barrier is arranged around the nanoparticles. According to the present invention, the oxidation barrier is provided in the form of a layer, in particular a layer arranged around the thermochromic nanoparticles. Here, it is preferably envisioned that the oxidation barrier layer is provided in the form of a coating, as depicted in Fig. 3. Such nanoparticles 8 can also be perceived as encapsulated or coated nanoparticles, and in particular as core-shell nanoparticles. By means of the coating it is advantageously achieved, that the oxidation sensitive material the nanoparticles are composed of is shielded from in particular oxygen, so that oxidation of the core material is efficiently prevented.

The coating of the thermochromic nanoparticles 8 may be obtained from a sol-gel process or the like. It can comprise, in particular consist of, inorganic oxides, in particular wherein the inorganic oxides are obtained from a sol-gel process. Exemplarily, the coating may comprise silicon dioxide and/or may be obtained from, in particular organically modified, silanes, siloxanes and or silicates. Alternatively, coatings comprising titanium dioxide, zirconium dioxide of hafnium dioxide can be used.

Likewise, the thermochromic nanoparticles 8 may comprise an organic coating and may be obtained from a polymerization process, e.g. an emulsion polymerization of acrylates or vinyl alcohols. By way of example, respective coatings may contain poly vinyl alcohol (PVA), poly(acylic acid) (PAA), polymethacrylate (PMA), polymethylmethacrylate (PMMA), poly(hydroxyethylmethacrylate) (PHEMA), polyacrylamides, ethylene-vinyl acetate (EVA), ethylene-butyl acrylates (EBA), and copolymers and/or mixtures thereof, and/or may be obtained from polymerizations of vinyl alcohols (VA), acrylic acids (AA) like butylacrylate (BA), methacrylate (MA), methylmethacrylate (MMA), acrylic amides, hydroxyethyl methacrylate (HEMA), vinyl acetates (VA), olefins like ethylene, alone or in mixture with one another..

Alternatively and/or additionally to an oxidation barrier layer that is arranged around the thermochromic nanoparticles 8, it has been proven advantageous, if the oxidation barrier is provided in the form of a layer arranged on either side of the layer A, as is shown in Fig. 4.

According to the present invention, it is provided, that the plastic film 1 comprises further layers B, in particular at least two layers B, preferably wherein the layers B are arranged on either side of the layer A. Furthermore, it is particularly preferred in this regard, if the layers B have oxygen protective properties, in particular act as an oxygen barrier. This configuration or arrangement of the plastic film 1 preferably provides for stabilization of the thermochromic nanoparticles 6 and preservation of the thermochromic properties of the plastic film 1, respectively.

In this regard, Fig. 4 shows a very preferred embodiment of an inventive plastic film 1, wherein the plastic 1 film has a three-layer structure, in particular is a three-layer coextruded film, wherein the film comprises the following sequence of layers:

| | |
|---|---|
| Layer B1: | layer having oxygen protective properties comprising, in particular consisting of, polymers or copolymers of EVOH, |
| Layer A1: | core layer comprising, in particular consisting of, a thermoplastic polymer, preferably selected from the group consisting of LDPE, LLDPE, EVA, EBA or mixtures thereof, more preferably EVA, particularly preferably with high VA content, in which thermochromic nanoparticles 6 are embedded |
| Layer B2: | layer having oxygen protective properties comprising, in particular consisting of, polymers or copolymers of EVOH, |

in particular wherein the layers B1 and B2 comprise a similar or from another different composition.

According to the embodiment of the inventive plastic film 1 depicted in Fig. 4, the layer A1 comprises only one kind or type of thermochromic nanoparticles 6, i.e. the nanoparticles comprised in the layer A all have - within the standard deviation - the same composition, e.g. comprise undoped vanadium dioxide or vanadium dioxide doped with a distinctive amount of a dopant, for example tungsten. According to a preferred embodiment, which however is not shown in the figures, it can also be envisioned that the layer A comprises coated thermochromic nanoparticles 8 within the configuration shown in Fig. 4.

It can further be beneficial for the inventive plastic film 1, if the layer A comprises thermochromic nanoparticles of more than one kind or type. This preferred embodiment of the present invention is depicted in Fig. 5. Here, the layer A1 comprises three different kinds or types of thermochromic nanoparticles 6, 9 and 10. For example, the nanoparticles can comprise pure or doped vanadium dioxide, wherein further the dopant or amount used of the dopant can differ. The layer A1 and thus the entire plastic film 1can display a much broader range of properties based on this particular configuration. In particular, the thermochromic properties of the layer can be configured to display continuingly and/or gradually, meaning that the transition between infrared light-transmissive and infrared light-reflective or -opaque proceeds in a more fluent way instead of e.g. on/off-wise.

Another preferred embodiment of the inventive plastic film 1, which likewise is configured such that the thermochromic properties of the layer display continuingly and/or gradually, is depicted in Fig. 6.

According to Fig. 6, the plastic film 1 has a four-layer structure, in particular is a four-layer coextruded film, wherein the film 1 comprises the following sequence of layers:

| | |
|---|---|
| Layer B1: | layer having oxygen protective properties comprising, in particular consisting of, polymers or copolymers of EVOH, |
| Layer A1: | first core layer comprising, in particular consisting of, a thermoplastic polymer, preferably selected from the group consisting of LDPE, LLDPE, EVA, EBA or mixtures thereof, more preferably EVA, particularly preferably with high VA content, in which a first kind or type of thermochromic nanoparticles 6 is embedded, |
| Layer A2: | second core layer comprising, in particular consisting of, a thermoplastic polymer, preferably selected from the group consisting of LDPE, LLDPE, EVA, EBA or mixtures thereof, more preferably EVA, particularly preferably with high VA content, in which a second kind or type of thermochromic nanoparticles 9 is embedded, |
| Layer B2: | layer having oxygen protective properties comprising, in particular consisting of, polymers or copolymers of EVOH, |

in particular wherein the layers B1 and B2 comprise a similar or from another different composition.

The layers A1 and A2 comprise from another different thermochromic nanoparticles 6 and 9, wherein each layer comprises only one kind or type of nanoparticles. By means of this configuration, wherein thermochromic nanoparticles 6 and 9 with different transition temperatures are integrated into different layers A of the inventive plastic film, it can be provided that the plastic film 1 adjusts gradually to incoming infrared light and supplies e.g. crops covered by the plastic film - next to visible light - with adequate amounts of thermal radiation and/or ensures adequate tempering of the area covered.

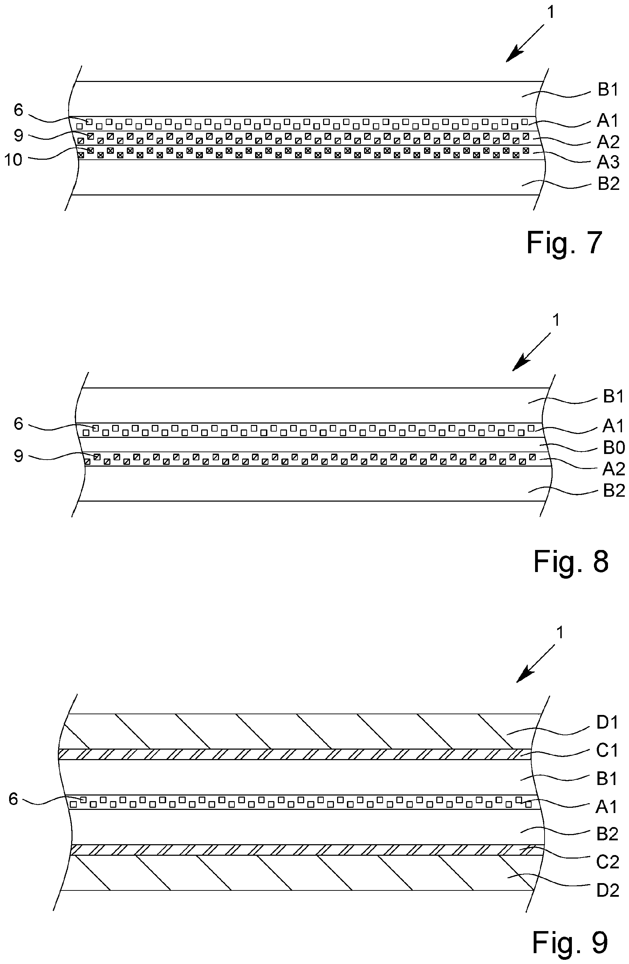

The same advantages account for the embodiment of the inventive plastic film 1 shown in Fig. 7, which has a five-layer structure, in particular is a five-layer coextruded film, wherein the film 1 comprises the following sequence of layers:

| | |
|---|---|
| Layer B1: | layer having oxygen protective properties comprising, in particular consisting of, polymers or copolymers of EVOH, |
| Layer A1: | first core layer comprising, in particular consisting of, a thermoplastic polymer, preferably selected from the group consisting of LDPE, LLDPE, EVA, EBA or mixtures thereof, more preferably EVA, particularly preferably with high VA content, in which a first kind or type of thermochromic nanoparticles 6 is embedded, |
| Layer A2: | second core layer comprising, in particular consisting of, a thermoplastic polymer, preferably selected from the group consisting of LDPE, LLDPE, EVA, EBA or mixtures thereof, more preferably EVA, particularly preferably with high VA content, in which a second kind or type of thermochromic nanoparticles 9 is embedded, |
| Layer A3: | third core layer comprising, in particular consisting of, a thermoplastic polymer, preferably selected from the group consisting of LDPE, LLDPE, EVA, EBA or mixtures thereof, more preferably EVA, particularly preferably with high VA content, in which a third kind or type of thermochromic nanoparticles 10 is embedded, |
| Layer B2: | layer having oxygen protective properties comprising, in particular consisting of, polymers or copolymers of EVOH, |

in particular wherein the layers B1 and B2 comprise a similar or from another different composition.

Generally, it can be said that, the more layers A with from another different thermochromic nanoparticles comprising in particular different transition temperatures are combined in the inventive plastic film 1, the more can the plastic film 1 adjust gradually and/or continuingly to variations in the intensity of incoming infrared light and/or thermal radiation. Therefore, it is furthermore possible in the context of the present invention that even further layers, i.e. layers A4, A5, A6, ..., can be integrated into the inventive plastic film 1.

According to the preferred embodiment of the inventive plastic film 1 shown in Fig. 8, it can be further beneficial, to integrate additional layers B into the film assembly. Particularly, the layer B protects the layers A, in particular the nanoparticles 6 and 9 comprised therein, against oxidation. By means of additional oxygen-barrier or oxidation-protective layers, this effect can be enhanced to positively influence the resilience and longevity of the inventive plastic film.

In Fig. 9, a further preferred embodiment of the present invention is depicted. According to Fig. 8, the plastic film 1 has a seven-layer structure, in particular is a seven-layer coextruded film, wherein the film 1 comprises the following sequence of layers:

| | |
|---|---|
| Layer D1: | outer layer, in particular sealing layer, comprising, in particular consisting of, materials selected from polyolefins, in particular selected from LDPE, LLDPE, EVA or mixtures thereof, |
| Layer C1: | bonding layer, |
| Layer B1: | layer having oxygen protective properties comprising, in particular consisting of, polymers or copolymers of EVOH, |
| Layer A1: | core layer comprising, in particular consisting of, a thermoplastic polymer, preferably selected from the group consisting of LDPE, LLDPE, EVA, EBA or mixtures thereof, more preferably EVA, particularly preferably with high VA content, in which thermochromic nanoparticles 6 are embedded, |
| Layer B2: | layer having oxygen protective properties comprising, in particular consisting of, polymers or copolymers of EVOH, |
| Layer C2: | bonding layer, |
| Layer D2: | outer layer, in particular sealing layer, comprising, in particular consisting of, materials selected from polyolefins, in particular selected from LDPE, LLDPE, EVA or mixtures thereof, |

in particular wherein the layers B1 and B2 and/or C1 and C2 and/or D1 and D2 comprise a similar or from another different composition, is depicted.

This embodiment of the present invention is particularly preferred as it provides for very robust and endurable plastic films 1 that are ideally suited for perennial use. The respective plastic films 1 can withstand extreme weather ranging from very intense insolation to heavy rain and wind.

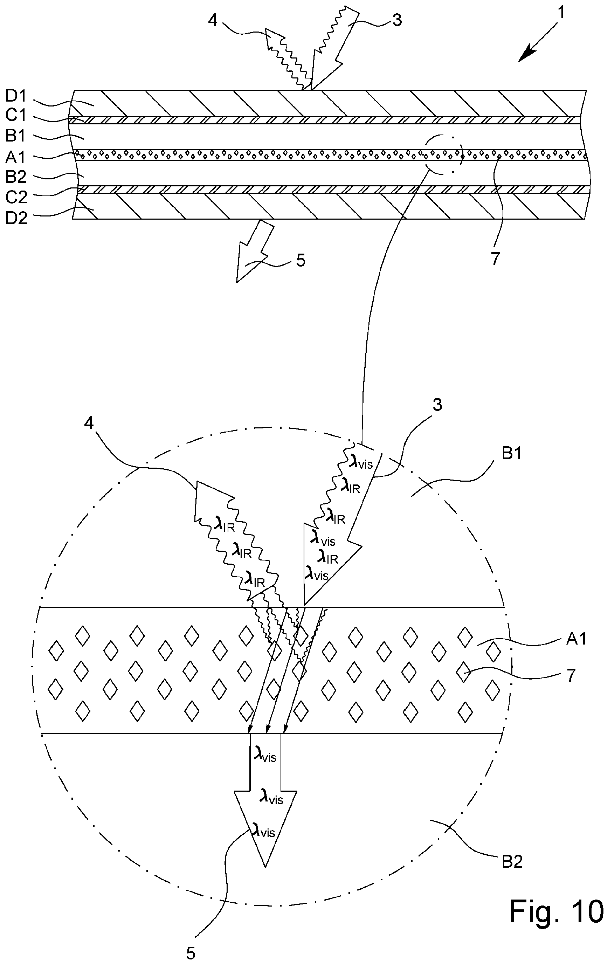

In Fig. 10, the working principle of the inventive plastic film 1 is depicted by means of example for the preferred embodiment of the inventive film 1 according to Fig. 9. In Fig. 9, the plastic film 1 is shown in the state at low temperatures, in particular temperatures below the transition temperature of the thermochromic film 1. As explained above, the film 1 is transparent for most fractions of solar radiation 3 in this state, so that crops covered with the inventive film 1 can be supplied appropriately with growth-relevant visible light and can be reliably kept at convenient temperatures.

In Fig. 10, the plastic film 1 is shown in the state at elevated temperatures, in particular temperatures above the transition temperature of the thermochromic film 1. At the transition temperature and temperatures going beyond this temperature, the thermochromic nanoparticles 7 embedded in the layer A undergo a structural change on the molecular level which in particular influences the interaction of the nanoparticles 7 with solar radiation. Specifically, the nanoparticles 7 transit from being infrared light-transparent to being infrared light-reflective. This process is preferably entirely reversible and proceeds inherently and passively.

As is depicted in Fig. 10, solar radiation 3 comprises light or radiation of different regions of the electromagnetic spectrum, wherein e.g. visible light (λ_{VIS}) and infrared radiation (λ_{IR}) have different wavelengths. The incoming solar radiation 3 interacts with the thermochromic nanoparticles 7 in the layer A. Due to the molecular structure the nanoparticles 7 comprise at elevated temperatures, the nanoparticles 7 reflect the infrared light. As a result, radiation 4 from the infrared region of the electromagnetic spectrum is reflected on the surface of the film 1. For visible light, however, the plastic film 1 is fully transparent, in particular since the molecular changes within the thermochromic nanoparticles have no effect on the interaction of the nanoparticles 7 with visible light. Accordingly, visible radiation 5 can transmit through the plastic film while infrared light or radiation 4 is reflected by the film 1.

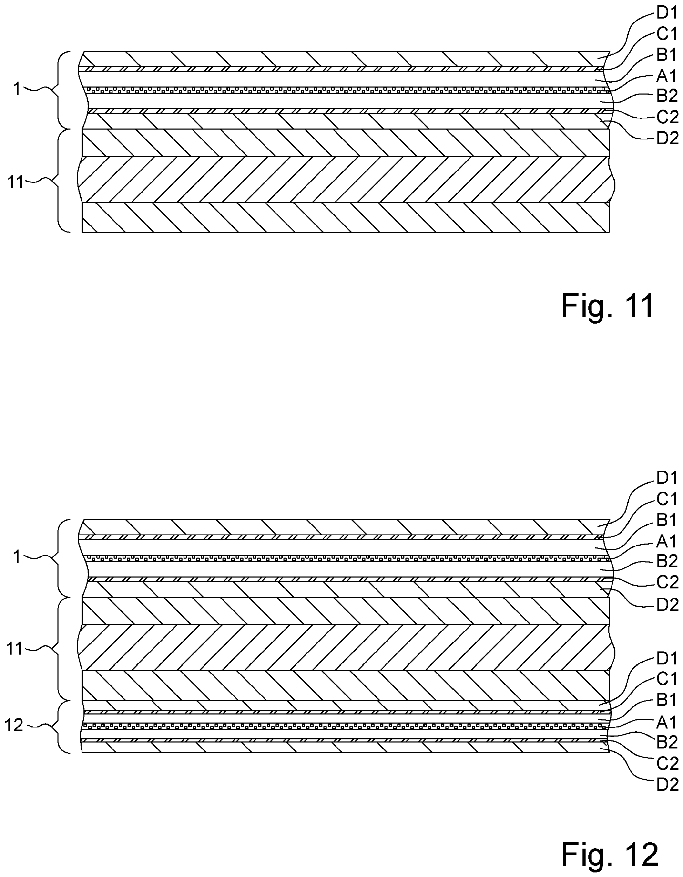

The Fig. 11 and 12 show further preferred, advantageous applications of the inventive plastic film 1, which according to Fig. 11 can be mounted on top of a conventional greenhouse plastic film 11. Also, it is possible to install the inventive plastic film 1 on both sides of a conventional greenhouse plastic film 11, as is shown in Fig. 12, which achieves an even more efficient reflection of infrared light or radiation in cases of very intense insolation. In this context, it may be particularly preferred to use a combination of an in relation to another thicker plastic film 1 and thinner plastic film 12, as this allows to benefit from the combinatory effect of the two thermochromic plastic films used while at the same time being able to reduce material and/or production costs.

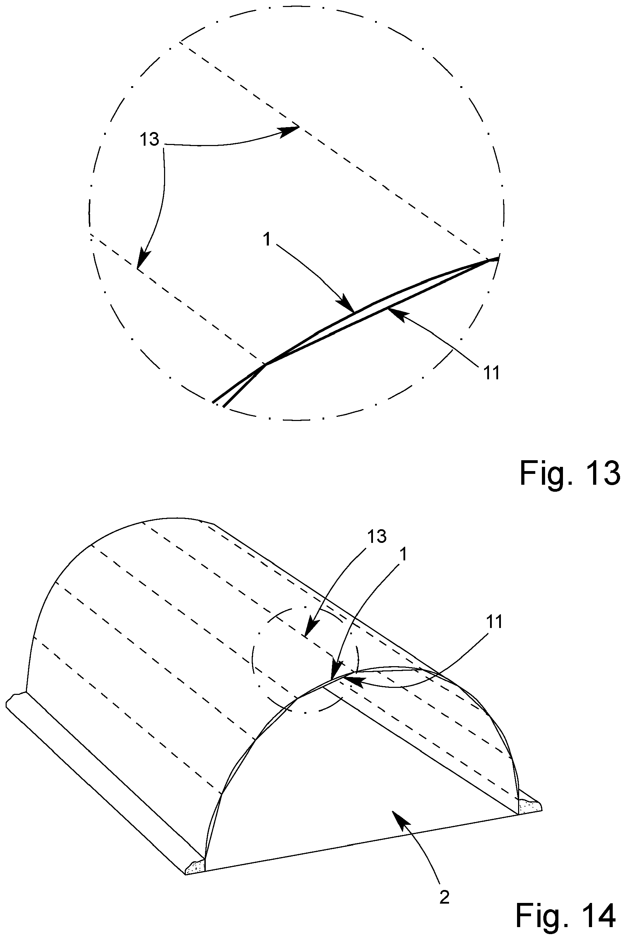

The Fig. 13 and 14 depict a further preferred embodiment of the present invention according to which the plastic film 1 is mounted on a conventional greenhouse or low tunnel film 11 on top of its entire surface. This is preferably performed by welding the plastic film 1 on the greenhouse or low tunnel plastic film 11 so that the greenhouse or low tunnel 2 is provided with thermochromic properties by means of the inventive plastic film 1. The welds 13 can be at the whole width of the films or at some distinct sections, and can further be continuous or discontinuous, as shown in the Fig. 13 and 14, such that the superimposed plastic film 1 is firmly attached on the conventional plastic film 11.

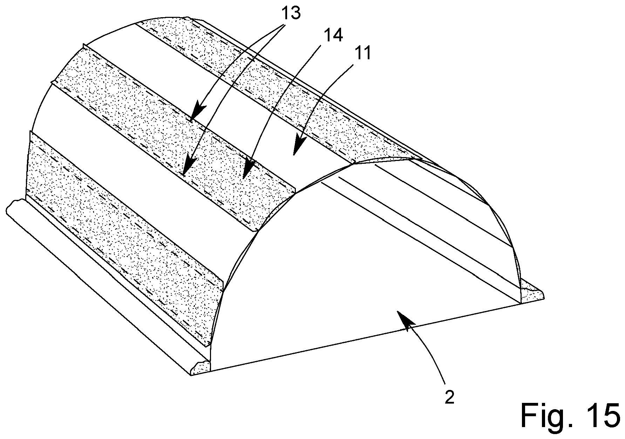

Lastly, another preferred embodiment of the present invention is depicted in Fig. 15. According to this embodiment, the inventive plastic film 1 is mounted only partly on top of a conventional greenhouse or low tunnel film 11. In this context, it is specifically preferred, if the plastic film 1 is attached to the film11 in the form of stripes 14 alongside the greenhouse or low tunnel 2. This embodiment is particularly suited for cases, where only a partial protection against thermal radiation and high heat loads is needed or afforded. This may for example be the case for such crops, that require higher temperatures for growth or fruit ripening, e.g. due to their morphogenetic specifications.

### Reference signs:

- 1: plastic film
- 2: greenhouse / low tunnel
- 3: solar radiation
- 4: reflected radiation
- 5: transmitted radiation
- 6: infrared light-transmissive thermochromic nanoparticles
- 7: infrared light-reflective thermochromic nanoparticles
- 8: coated thermochromic nanoparticles
- 9: further thermochromic nanoparticles
- 10: further thermochromic nanoparticles
- 11: conventional plastic film
- 12: thin plastic film
- 13: welds
- 14: plastic film stripes

## Claims

1. Plastic film (1) with thermochromic properties, in particular for agricultural use, comprising at least one layer A, wherein the layer A comprises a thermoplastic polymer in which thermochromic nanoparticles are embedded, and further layers B,
**characterized in that**
the thermochromic nanoparticles are stabilized against oxidation by means of an oxidation barrier, wherein the oxidation barrier is provided in the form of a layer arranged around the thermochromic nanoparticles and/or arranged on either side of the layer A.

2. Plastic film (1) according to claim 1, **characterized in that** the plastic film is a multilayer plastic film.

3. Plastic film (1) according to claims 1 or 2, **characterized in that** the plastic film is transparent for visible light.

4. Plastic film (1) according to claims 1 to 3, **characterized in that** the plastic film is temperature-dependent transparent or reflective for infrared light.

5. Plastic film (1) according to claim 4, **characterized in that** the plastic film transits from transparent or reflective for infrared light-at a specific transition temperature.

6. Plastic film (1) according to claim 5, **characterized in that** the plastic film is transparent for infrared light at temperatures below the specific transition temperature.

7. Plastic film (1) according to claim 5, **characterized in that** the plastic film is reflective for infrared light at temperatures above the specific transition temperature.

8. Plastic film (1) according to claims 5 to 7, **characterized in that** the plastic film transits in particular at least partially from transparent or reflective for infrared light at at least one specific transition temperature.

9. Plastic film (1) according to one of the preceding claims, **characterized in that** the thermochromic nanoparticles comprise inorganic, in particular metallic, preferably transition metallic, materials.

10. Plastic film (1) according to one of the preceding claims, **characterized in that** the thermochromic nanoparticles comprise vanadium, preferably vanadium oxide, more preferably vanadium dioxide, and optionally additional dopants, in particular consist thereof.

11. Plastic film (1) according to claim 1, **characterized in that** the plastic film comprises further layers B, in particular at least two layers B, preferably wherein the layers B are arranged on either side of the layer A.

12. Plastic film (1) according to claim 11, **characterized in that** the layers B comprise, in particular consist of, polymers or copolymers of ethylene vinyl alcohol (EVOH).

13. Plastic film (1) according to one of the preceding claims, **characterized in that** the plastic film comprises further layers D, in particular at least one outer layer, preferably two outer layers, more preferably wherein the further, in particular outer, layer D is a sealing layer.

14. Plastic film (1) according to claim 13, **characterized in that** the further, in particular outer, layer D comprises, in particular consists of, materials selected from polyolefins, in particular selected from low-density polyethylene (LDPE), linear low-density polyethylene (LLDPE), ethylene-vinyl acetate (EVA) or mixtures thereof.

15. Plastic film (1) according to one of the preceding claims, **characterized in that** at least some layers of the plastic film are joined, in particular bonded, by means of a bonding layer C.

16. Plastic film (1) according to one of the preceding claims, **characterized in that** the plastic film is superimposed and welded with continuous or discontinuous welds (13) on a conventional monolayer or multilayer greenhouse or low tunnel film (11).

17. Plastic film (1) according to one of the preceding claims, **characterized in that** the layers, in particular the outer, preferably sealing, layer and/or the layer having oxygen barrier properties, comprise durability-extending additives, in particular comprise antioxidants, UV-radiation stabilizers, UV-absorbers or mixtures thereof.

18. Use of an, in particular multilayer, plastic film (1) according to one of claims 1 to 17 for, in particular perennial, agricultural applications, preferably in and/or on greenhouses or low tunnels (2), more preferably to improve crop growth.

## Patentansprüche

1. Kunststofffolie (1) mit thermochromen Eigenschaften, insbesondere für die landwirtschaftliche Nutzung, umfassend mindestens eine Schicht A, wobei die Schicht A ein thermoplastisches Polymer umfasst, in das thermochrome Nanopartikel eingebettet sind, und weitere Schichten B,
**dadurch gekennzeichnet, dass**
die thermochromen Nanopartikel mittels einer Oxidationsbarriere gegen Oxidation stabilisiert sind, wobei die Oxidationsbarriere in Form einer Schicht vorgesehen ist, die um die thermochromen Nanopartikel herum und/oder auf beiden Seiten der Schicht A angeordnet ist.

2. Kunststofffolie (1) nach Anspruch 1, **dadurch gekennzeichnet, dass** die Kunststofffolie eine mehrschichtige Kunststofffolie ist.

3. Kunststofffolie (1) nach Anspruch 1 oder 2, **dadurch gekennzeichnet, dass** die Kunststofffolie für sichtbares Licht transparent ist.

4. Kunststofffolie (1) nach einem der Ansprüche 1 bis 3, **dadurch gekennzeichnet, dass** die Kunststofffolie temperaturabhängig transparent oder reflektierend für Infrarotlicht ist.

5. Kunststofffolie (1) nach Anspruch 4, **dadurch gekennzeichnet, dass** die Kunststofffolie bei einer bestimmten Übergangstemperatur von transparent zu reflektierend für infrarotes Licht übergeht.

6. Kunststofffolie (1) nach Anspruch 5, **dadurch gekennzeichnet, dass** die Kunststofffolie bei Temperaturen unterhalb der spezifischen Übergangstemperatur für Infrarotlicht transparent ist.

7. Kunststofffolie (1) nach Anspruch 5, **dadurch gekennzeichnet, dass** die Kunststofffolie bei Temperaturen oberhalb der spezifischen Übergangstemperatur für Infrarotlicht reflektierend ist.

8. Kunststofffolie (1) nach einem der Ansprüche 5 bis 7, **dadurch gekennzeichnet, dass** die Kunststofffolie bei mindestens einer bestimmten Übergangstemperatur insbesondere zumindest teilweise von transparent zu reflektierend für infrarotes Licht übergeht.

9. Kunststofffolie (1) nach einem der vorhergehenden Ansprüche, **dadurch gekennzeichnet, dass** die thermochromen Nanopartikel anorganische, insbesondere metallische, vorzugsweise übergangsmetallische, Materialien umfassen.

10. Kunststofffolie (1) nach einem der vorhergehenden Ansprüche, **dadurch gekennzeichnet, dass** die thermochromen Nanopartikel Vanadium, vorzugsweise Vanadiumoxid, besonders bevorzugt Vanadiumdioxid, und gegebenenfalls weitere Dotierstoffe umfassen, insbesondere daraus bestehen.

11. Kunststofffolie (1) nach Anspruch 1, **dadurch gekennzeichnet, dass** die Kunststofffolie weitere Schichten B, insbesondere mindestens zwei Schichten B, umfasst, wobei, vorzugsweise, die Schichten B beidseitig der Schicht A angeordnet sind.

12. Kunststofffolie (1) nach Anspruch 11, **dadurch gekennzeichnet, dass** die Schichten B Polymere oder Copolymere von Ethylenvinylalkohol (EVOH) umfassen, insbesondere daraus bestehen.

13. Kunststofffolie (1) nach einem der vorhergehenden Ansprüche, **dadurch gekennzeichnet, dass** die Kunststofffolie weitere Schichten D, insbesondere mindestens eine äußere Schicht, vorzugsweise zwei äußere Schichten, umfasst, wobei besonders bevorzugt die weitere, insbesondere äußere, Schicht D eine Dichtungsschicht ist.

14. Kunststofffolie (1) nach Anspruch 13, **dadurch gekennzeichnet, dass** die weitere, insbesondere äußere, Schicht D Materialien umfasst, insbesondere aus Materialien besteht, die ausgewählt sind aus Polyolefinen, insbesondere ausgewählt aus Polyethylen niedriger Dichte (LDPE), linearem Polyethylen niedriger Dichte (LLDPE), Ethylen-Vinylacetat (EVA) oder Mischungen davon.

15. Kunststofffolie (1) nach einem der vorhergehenden Ansprüche, **dadurch gekennzeichnet, dass** zumindest einige Schichten der Kunststofffolie mittels einer Verbindungsschicht C verbunden, insbesondere verklebt, sind.

16. Kunststofffolie (1) nach einem der vorhergehenden Ansprüche, **dadurch gekennzeichnet, dass** die Kunststofffolie auf eine herkömmliche ein- oder mehrschichtige Gewächshaus- oder Niedertunnelfolie (11) aufgelegt und mit kontinuierlichen oder diskontinuierlichen Schweißnähten (13) verschweißt ist.

17. Kunststofffolie (1) nach einem der vorhergehenden Ansprüche, **dadurch gekennzeichnet, dass** die Schichten, insbesondere die äußere Schicht, vorzugsweise die Dichtungsschicht, und/oder die Schicht mit Eigenschaften einer Stoffbarriere, haltbarkeitsverlängernde Zusätze, insbesondere Antioxidantien, UV-Strahlungsstabilisatoren, UV-Absorber oder Mischungen davon, enthalten.

18. Verwendung einer, insbesondere mehrschichtigen, Kunststofffolie (1) nach einem der Ansprüche 1 bis 17 für, insbesondere mehrjährige, landwirtschaftliche Anwendungen, vorzugsweise in und/oder an Gewächshäusern oder niedrigen Tunneln (2), besonders bevorzugt zur Verbesserung des Pflanzenwachstums.

## Revendications

1. Film plastique (1) aux propriétés thermochromiques, en particulier pour un usage agricole, comprenant au moins une couche A, dans lequel la couche A comprend un polymère thermoplastique dans lequel des nanoparticules thermochromiques sont incorporées, et d'autres couches B,
**caractérisé en ce que**
les nanoparticules thermochromiques sont stabilisées contre l'oxydation au moyen d'une barrière d'oxydation, la barrière d'oxydation se présentant sous la forme d'une couche disposée autour des nanoparticules thermochromiques et/ou disposée de part et d'autre de la couche A.

2. Film plastique (1) selon la revendication 1, caractérisé e ce que le film plastique est un film plastique multicouche.

3. Film plastique (1) selon les revendications 1 ou 2, **caractérisé en ce que** le film plastique est transparent à la lumière visible.

4. Film plastique (1) selon les revendications 1 à 3, **caractérisé en ce que** le film plastique est transparent ou réfléchissant pour la lumière infrarouge en fonction de la température.

5. Film plastique (1) selon la revendication 4, **caractérisé en ce que** le film plastique devient transparent ou réfléchissant pour la lumière infrarouge à une température de transition spécifique.

6. Film plastique (1) selon la revendication 5, **caractérisé en ce que** le film plastique est transparent pour la lumière infrarouge à des températures inférieures à la température de transition spécifique.

7. Film plastique (1) selon la revendication 5, **caractérisé en ce que** le film plastique est réfléchissant pour la lumière infrarouge à des températures supérieures à la température de transition spécifique.

8. Film plastique (1) selon les revendications 5 à 7, **caractérisé en ce que** le film plastique passe en particulier au moins partiellement de transparent à réfléchissant pour la lumière infrarouge à au moins une température de transition spécifique.

9. Film plastique (1) selon l'une des revendications précédentes, **caractérisé en ce que** les nanoparticules thermochromiques comprennent des matériaux inorganiques, en particulier métalliques, de préférence métalliques de transition.

10. Film plastique (1) selon l'une des revendications précédentes, **caractérisé en ce que** les nanoparticules thermochromiques comprennent du vanadium, de préférence de l'oxyde de vanadium, plus préférentiellement du dioxyde de vanadium, et éventuellement des dopants supplémentaires, en particulier constitués de ces derniers.

11. Film plastique (1) selon la revendication 1, **caractérisé en ce que** le film plastique comprend d'autres couches B, en particulier au moins deux couches B, de préférence dans lequel les couches B sont disposées de part et d'autre de la couche A.

12. Film plastique (1) selon la revendication 11, **caractérisé en ce que** les couches B comprennent, en particulier consistent en polymères ou copolymères d'éthylène-alcool vinylique (EVOH).

13. Film plastique (1) selon l'une des revendications précédentes, **caractérisé en ce que** le film plastique comprend d'autres couches D, en particulier au moins une couche extérieure, de préférence deux couches extérieures, plus préférablement dans lequel la couche supplémentaire, en particulier extérieure, D est une couche de scellement.

14. Film plastique (1) selon la revendication 13, **caractérisé en ce que** la couche supplémentaire, en particulier extérieure, D comprend, en particulier consiste en matériaux choisis parmi les polyoléfines, en particulier parmi le polyéthylène basse densité (LDPE), le polyéthylène basse densité linéaire (LLDPE), l'éthylène-acétate de vinyle (EVA) ou leurs mélanges.

15. Film plastique (1) selon l'une des revendications précédentes, **caractérisé en ce qu'**au moins certaines couches du film plastique sont assemblées, en particulier collées, au moyen d'une couche de liaison C.

16. Film plastique (1) selon l'une des revendications précédentes, **caractérisé en ce que** le film plastique est superposé et soudé par des soudures continues ou discontinues (13) sur un film conventionnel monocouche ou multicouche à serre ou à tunnel bas (11).

17. Film plastique (1) selon l'une des revendications précédentes, **caractérisé en ce que** les couches, en particulier la couche extérieure, de préférence la couche de scellement, et/ou la couche ayant des propriétés de barrière à l'oxygène, comprennent des additifs augmentant la durabilité, en particulier des antioxydants, des stabilisateurs de rayonnement UV, des absorbeurs d'UV ou des mélanges de ceux-ci.

18. Utilisation d'un film plastique (1), en particulier un film plastique multicouche, selon l'une des revendications 1 à 17 pour des applications agricoles, en particulier pérennes, de préférence dans et/ou sur des serres ou des tunnels bas (2), plus préférentiellement pour améliorer la croissance des cultures.
